# EUROPEAN PATENT APPLICATION

(11) **EP 1 793 323 A2**
(43) Date of publication of application: **06.06.2007**
(21) Application number: 06024836.6
(22) Date of filing: 30.11.2006
(51) Int. Cl.: G06F 21/24, G06F 21/22, G06F 21/00

(54) **Methods and systems for licensing computer software**

(30) Priority: 30.11.2005 US 290934
(71) Applicant: Efunds Corporation, Scottsdale AZ 85253 (US)
(72) Inventor: Bram, Charles, Fox Point Wisconsin 53217 (US); Emmerichs, John, Brown Deer Wisconsin 53223 (US); Wood, Richard, Bayside Wisconsin 53217 (US); Parrott, Christopher, Chester CH3 9HF (GB); Kohn, James, Shorewood Wisconsin 53211 (US)
(74) Representative: Grünecker, Kinkeldey, Stockmair & Schwanhäusser Anwaltssozietät

(57) **Abstract**

Methods and systems for determining whether a component defined in a computer program is authorized to activate. One method can include receiving an activation authorization request from the component; accessing a license control file defining a plurality of mappings, each of the plurality of mappings associating at least one of a plurality of components defined in the computer program to at least one required license; determining if the component is associated with at least one required license based on the plurality of mappings; and providing a response to the component.

## Description

### RELATED APPLICATIONS

The present application is a continuation-in-part of co-pending U.S. Patent Application Serial No. 11/159,847 titled "RULES-BASED SYSTEM ARCHITECTURE AND SYSTEMS USING THE SAME," filed on June 22, 2005, which claims priority to U.S. Provisional Patent Application Serial No. 60/649,905 of the same title, filed on February 4, 2005, the entire contents of which are both herein incorporated by reference. The entire content of co-pending U.S. Patent Application Serial No. 11/243,327 titled "METHODS AND SYSTEMS FOR PROVIDING A USER INTERFACE USING FORMS STORED IN A FORM REPOSITORY," filed on October 4, 2005, which is a continuation of co-pending U.S. Patent Application Serial No. 11/159,847, is also herein incorporated by reference.

### BACKGROUND OF THE INVENTION

Computer software providers often desire to control access to and activation of their computer software. In some embodiments, computer software provides create specialized versions of computer software for consumers that include only the functionality the computer software provider has authorized the consumers to perform. For example, depending on functionality purchased, authorized, and/or needed by a specific consumer, the computer software provider can design specific computer software in order prevent the consumer from obtaining un-purchased, un-authorized, and/or un-needed functionality.

Designing computer software, however, tailored to a specific purchase, authorization, and/or need of a consumer can be expensive and time-consuming. In an attempt to overcome the these deficiencies, some computer software providers create one version of computer software and provide consumer with licenses that authorize use of particular functionality provided by the computer system. Changing relationships between functionality of the system and the licenses required to activate the functionality, however, can be difficult to modify with modifying both the licenses and the computer software.

### SUMMARY OF THE INVENTION

Embodiments of the invention provide a method of determining whether a component defined in a computer program is authorized to activate. The method can include receiving an activation authorization request from the component; accessing a license control file defining a plurality of mappings, each of the plurality of mappings associating at least one of a plurality of components defined in the computer program to at least one required license; determining if the component is associated with at least one required license based on the plurality of mappings; and providing a response to the component.

Another embodiment provides a system for determining whether a component defined in a computer program is authorized to activate. The system can include a license control file defining a plurality of mappings, each of the plurality of mappings associating at least one of a plurality of components defined in the computer program with at least one required license, and a license server configured to receive an activation authorization request from the component, to determine if the component is associated with at least one required license based on the plurality of mappings, and to provide a response to the component.

Additional embodiments also provide a system for determining whether a plurality of components defined in a computer program are authorized to activate. The system can include a primary license server configured to receive activation authorization requests from the plurality of components, to access a license control file defining a plurality of mappings, each of the plurality of mappings associating at least one of the plurality of components with at least one required license, and to provide a response to the plurality of components.

### BRIEF DESCRIPTION OF THE DRAWINGS

FIG. 1 schematically illustrates computer system architecture according to one embodiment of the invention.

FIG. 2 illustrates a configuration subsystem defined in the computer system architecture of FIG. 1.

FIG. 3 illustrates object-oriented functionality of the configuration subsystem of FIG. 2 according to one embodiment of the invention.

FIG. 4 illustrates a process of obtaining and validating configuration data from a manual entry process and an automated entry process according to one embodiment of the invention.

FIG. 5 illustrates a method of generating customized user interfaces with the configuration subsystem of FIG. 2 according to one embodiment of the invention.

FIG. 6 illustrates a workflow management feature of the configuration subsystem of FIG. 2 according to one embodiment of the invention.

FIG. 7 illustrates a process of data life cycle management according to one embodiment of the invention.

FIG. 8 illustrates an application included in the computer system architecture of FIG. 1 and configuration management application programming interfaces according to one embodiment of the invention.

FIG. 9 illustrates functionality of a monitoring subsystem defined in the computer system architecture of FIG. 1 according to one embodiment of the invention.

FIGS. 10 *-* 15 illustrate methods of interacting with a logger object according to one embodiment of the invention.

FIG. 16 schematically illustrates a processing module defined in the computer system architecture of FIG. 1.

FIG. 17 illustrates a rules engine included in the processing module of FIG. 16.

FIGS. 18A and 18B illustrate rules executed by the rules engine of FIG. 17 according to one embodiment of the invention.

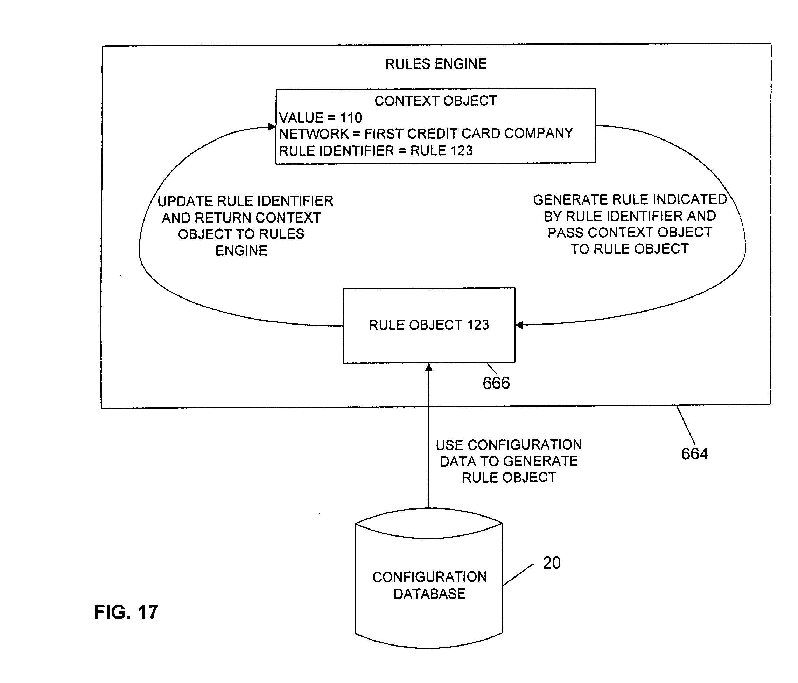

FIG. l9 schematically illustrates a chain of rules executed by the rules engine of FIG. 17 according to one embodiment of the invention.

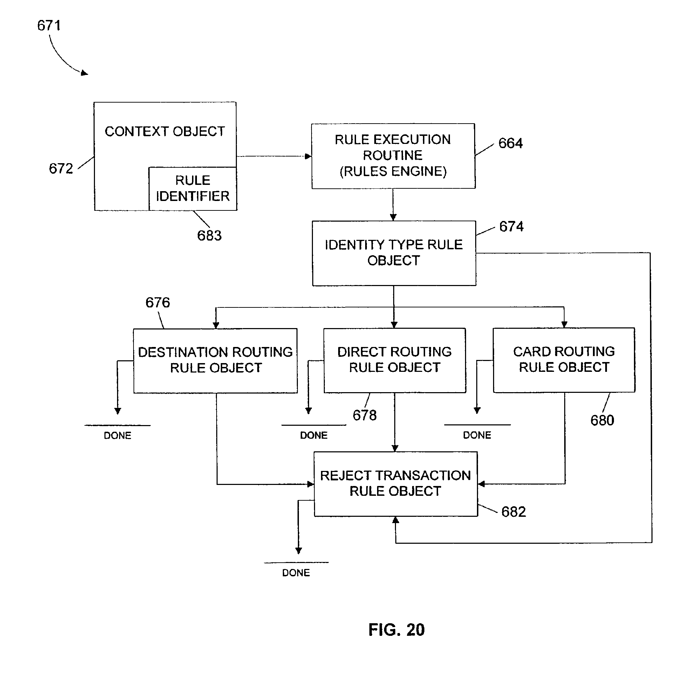

FIG. 20 illustrates a transaction routing routine performed by the rules engine of FIG. 17 according to one embodiment of the invention.

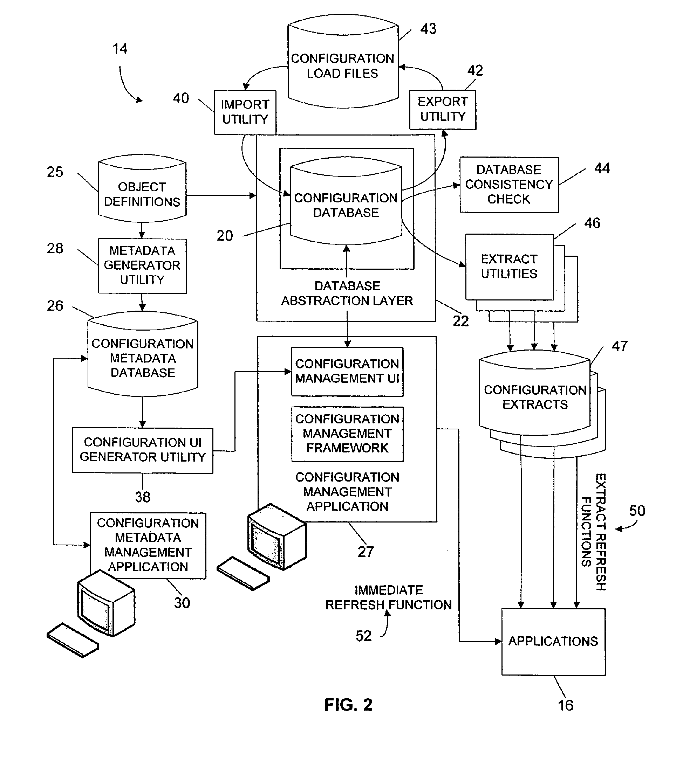

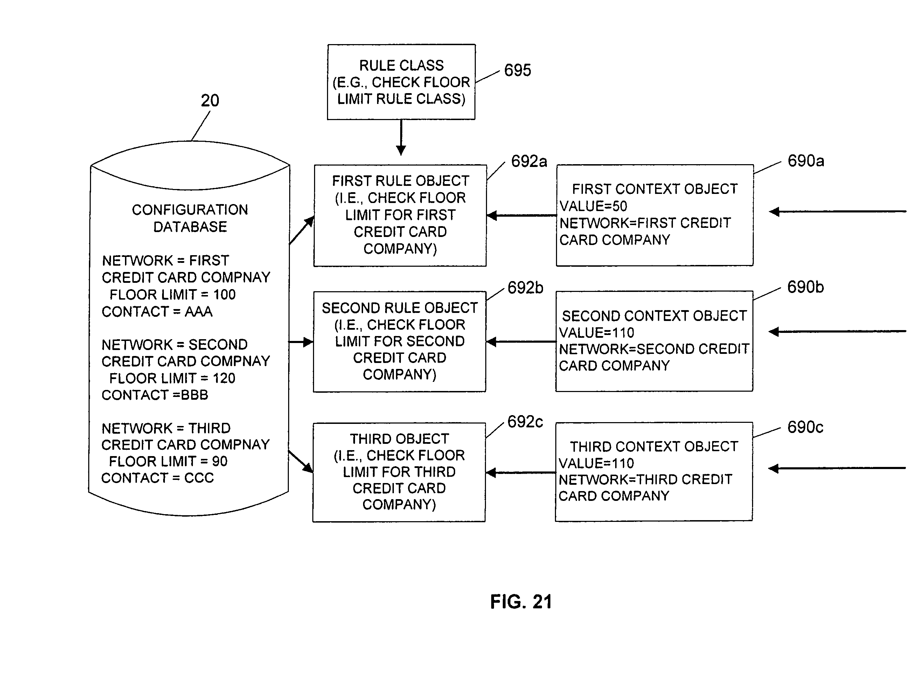

FIG. 21 illustrates a process of creating rule objects based on configuration data stored in the configuration subsystem of FIG. 2.

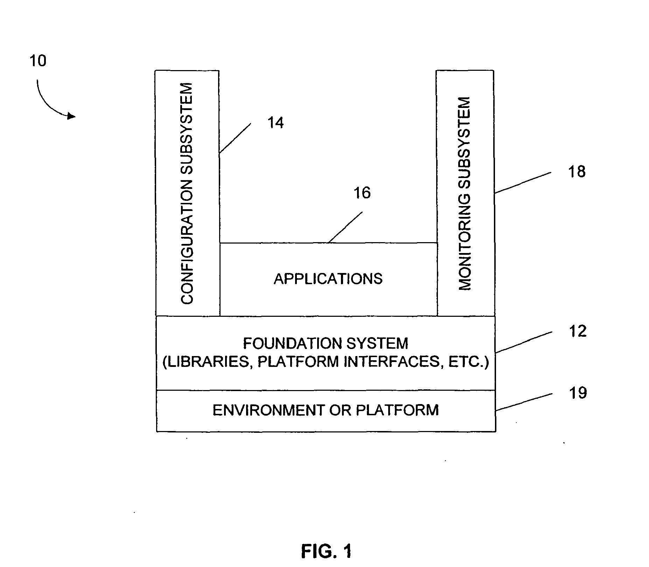

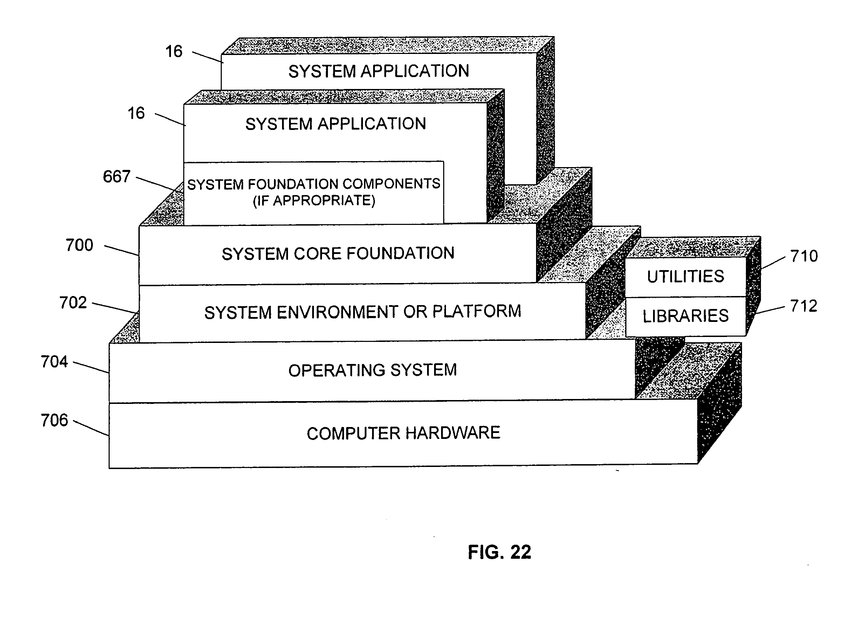

FIG. 22 schematically illustrates a structure of applications and subsystems embodying the computer system architecture of FIG. 1.

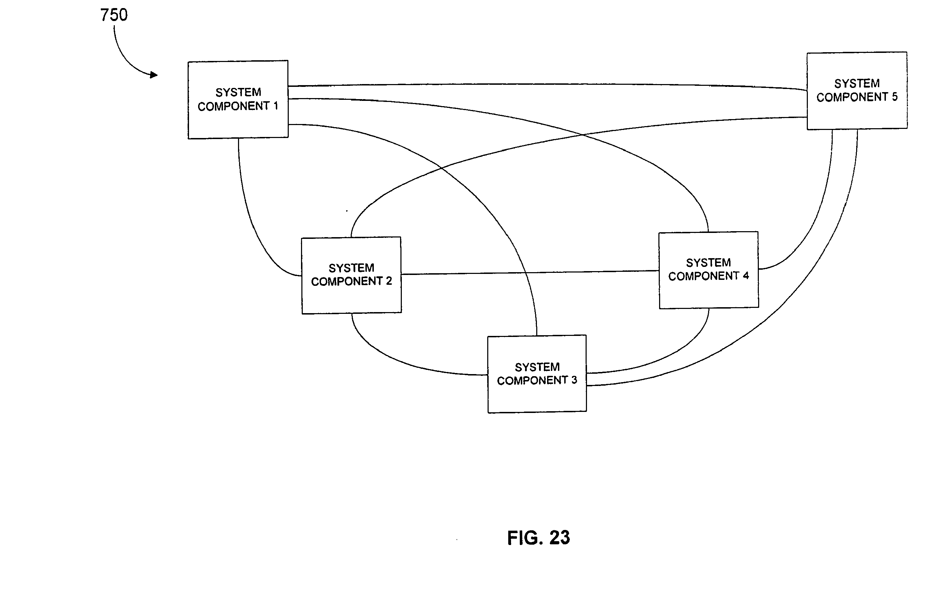

FIG. 23 illustrates an embodiment of the computer system architecture of FIG. including heterogeneous system components.

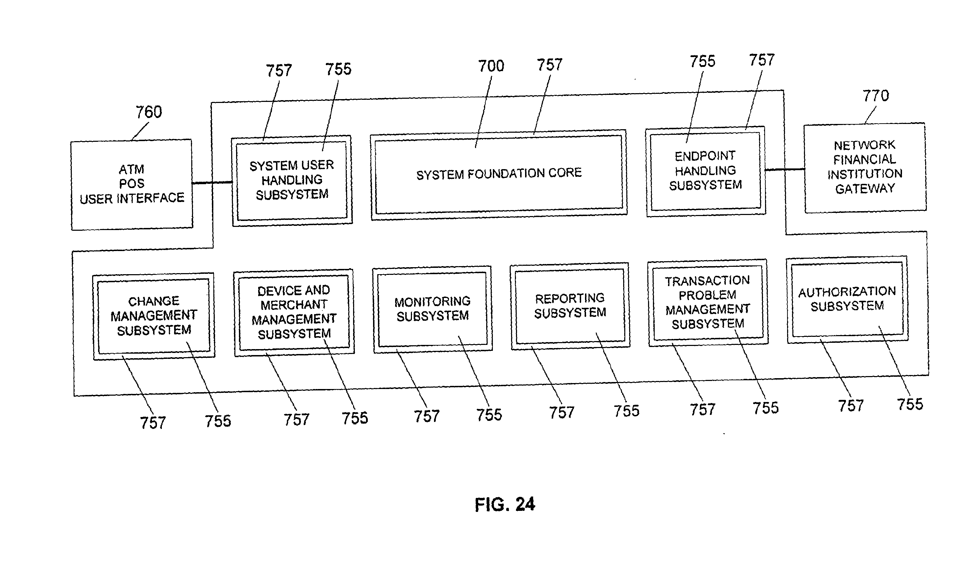

FIG. 24 schematically illustrates subsystems and a communication facility included in an embodiment of the computer system architecture of FIG. 1.

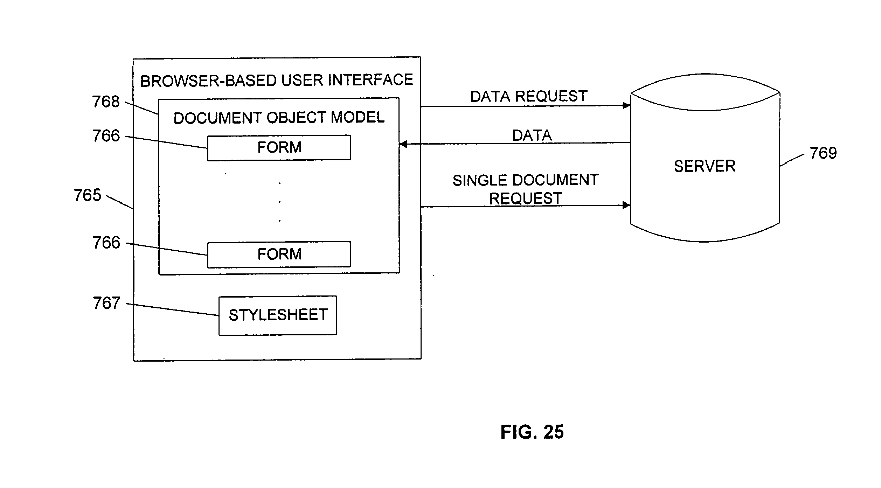

FIG. 25 illustrates functionality of a browser-based user interface according to one embodiment of the invention.

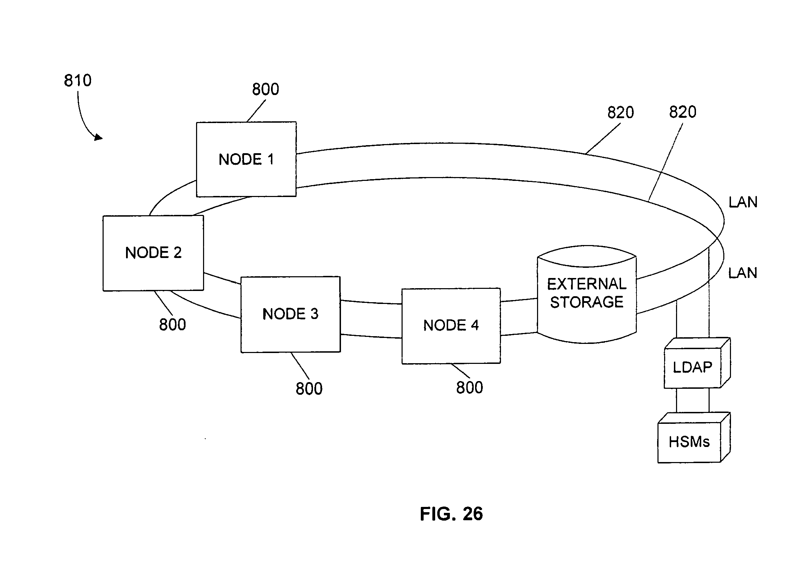

FIG. 26 illustrates an embodiment of the computer system architecture of FIG. 1 including a multiple node cluster and secondary communication links.

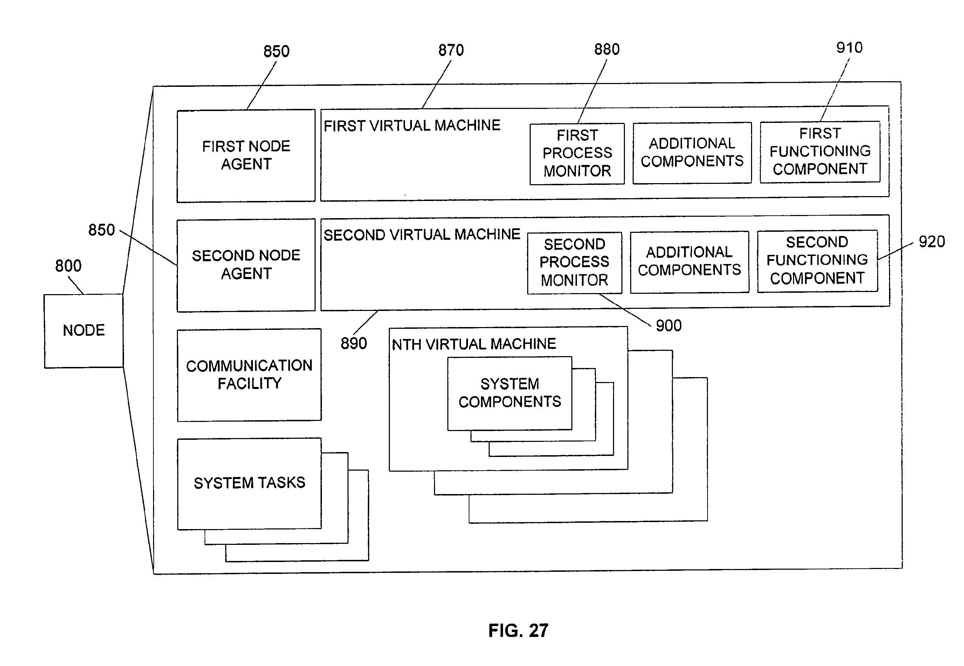

FIG. 27 illustrates processes executed by a node included in an embodiment of the computer system architecture of FIG. 1.

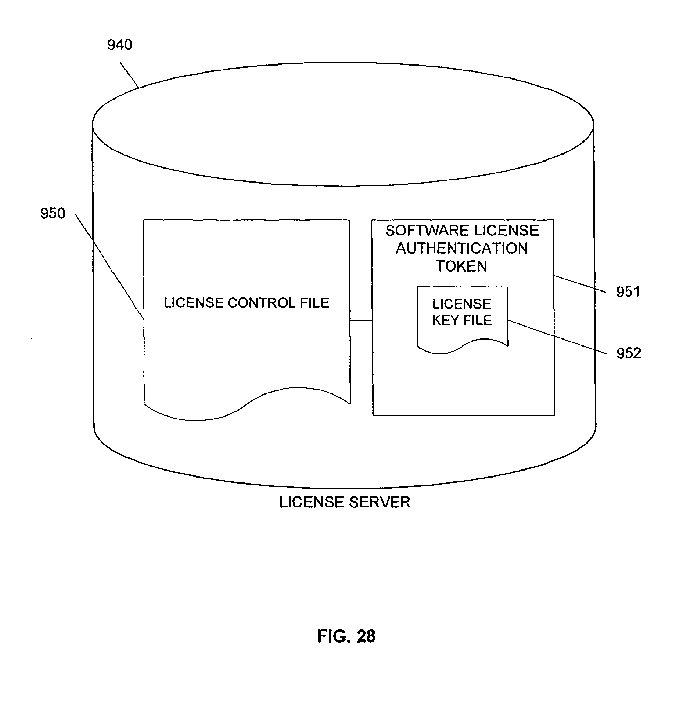

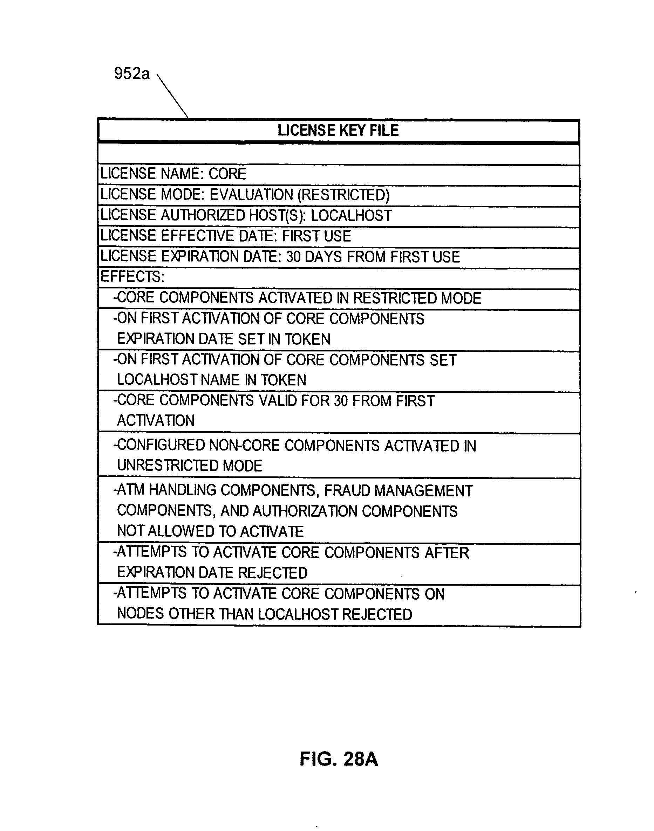

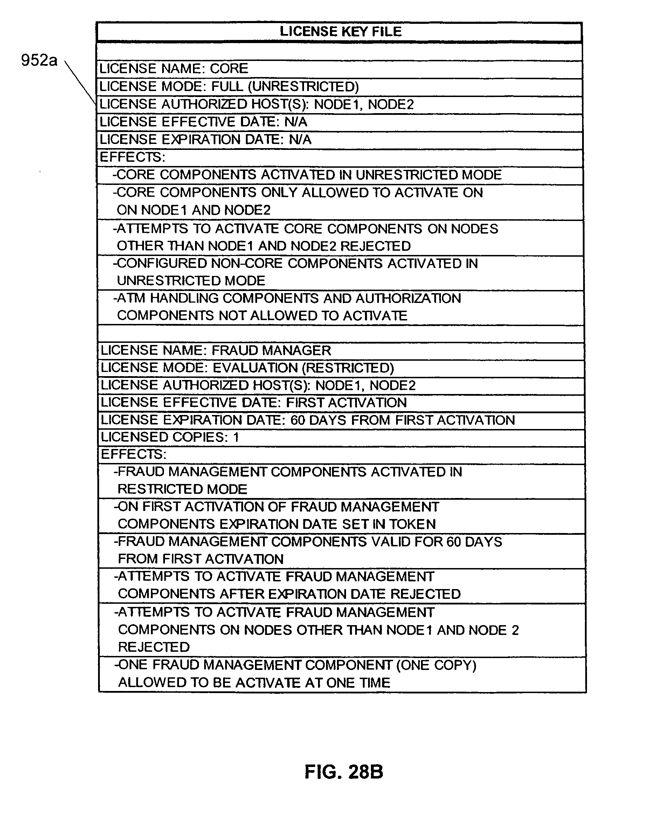

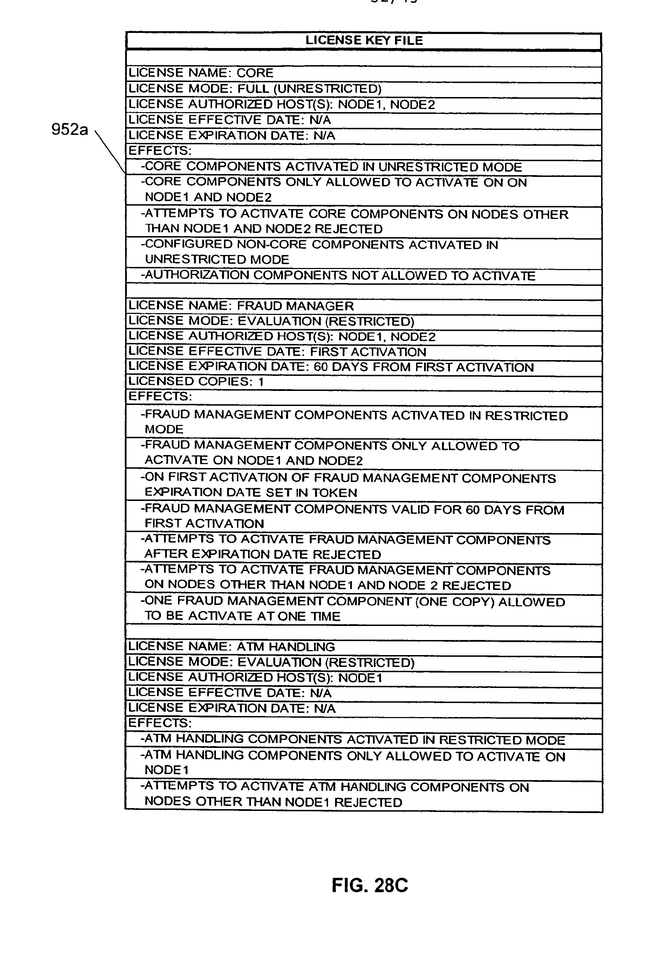

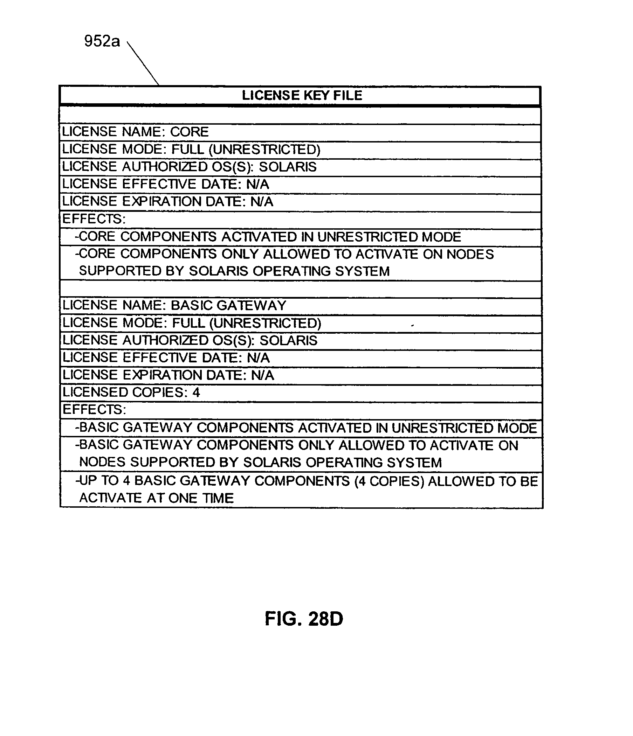

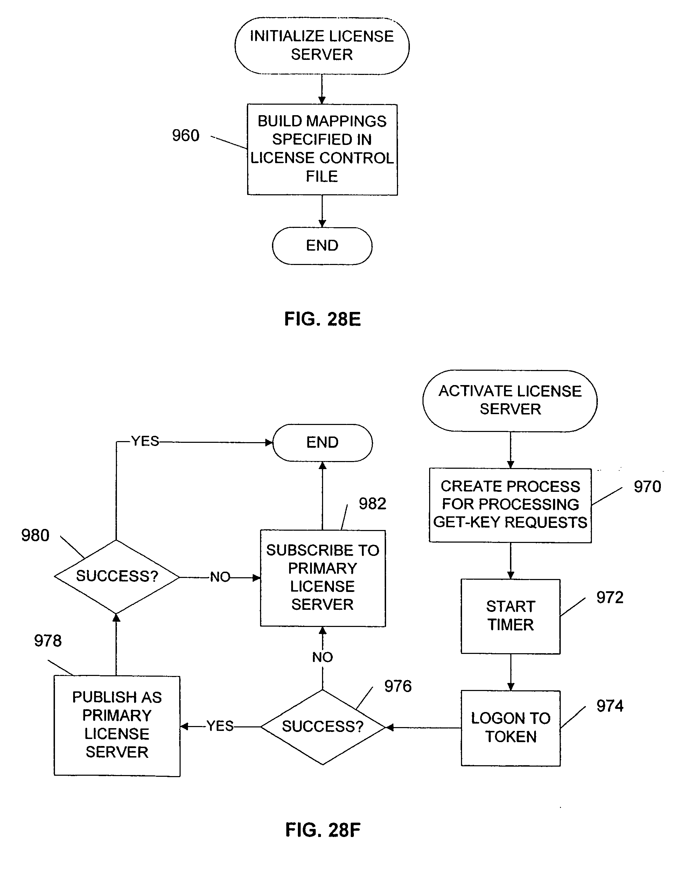

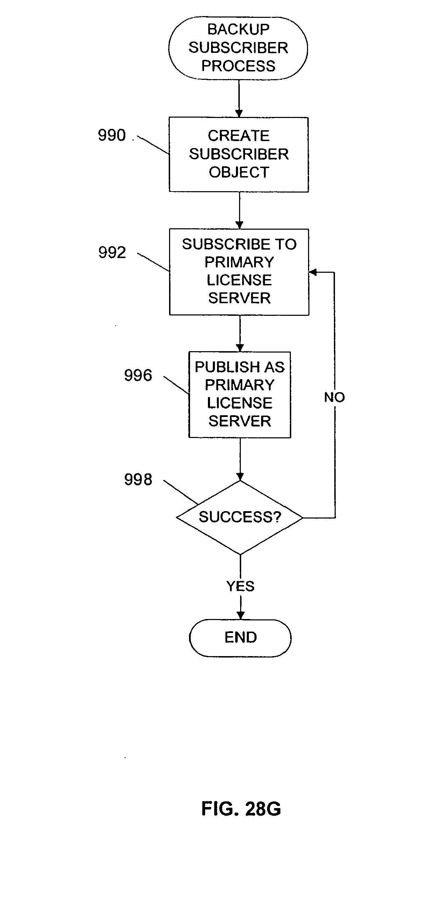

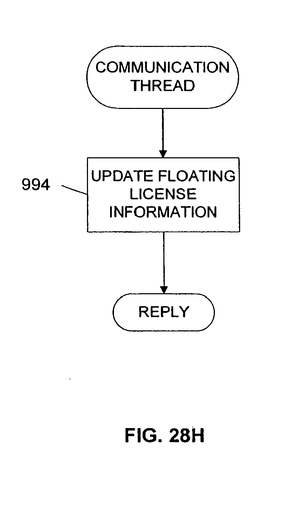

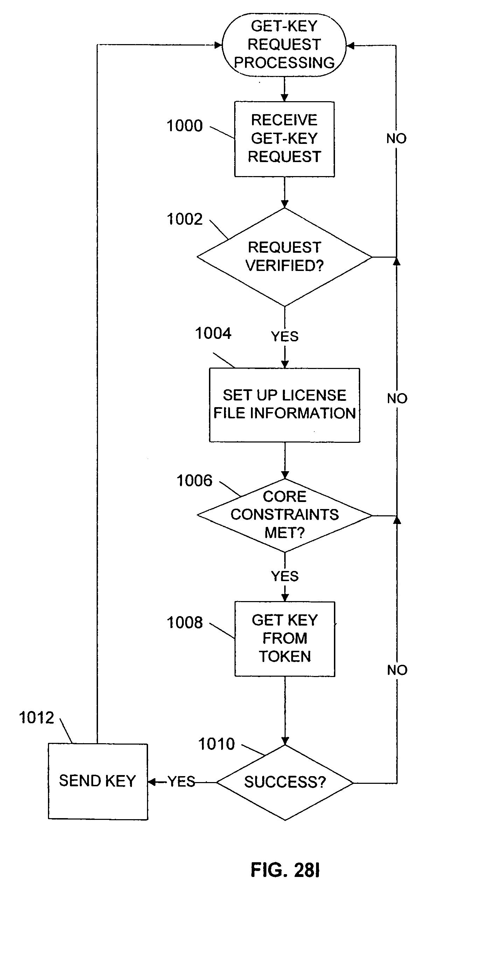

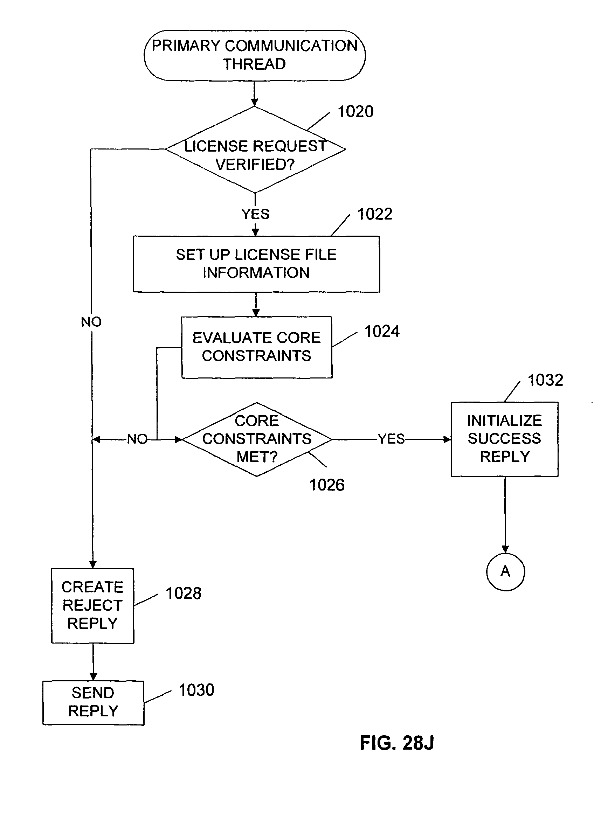

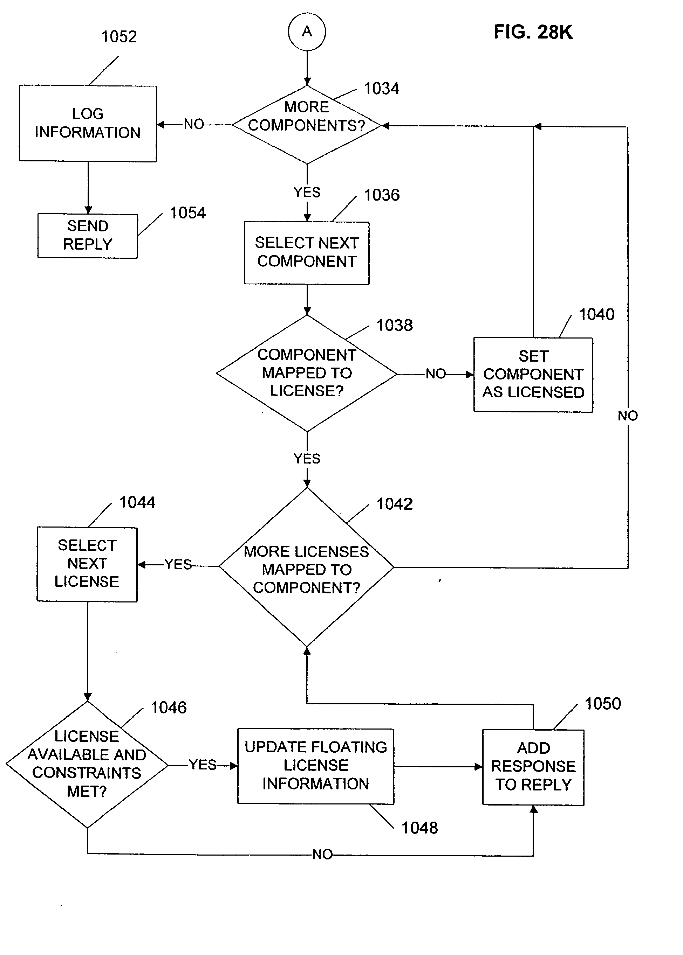

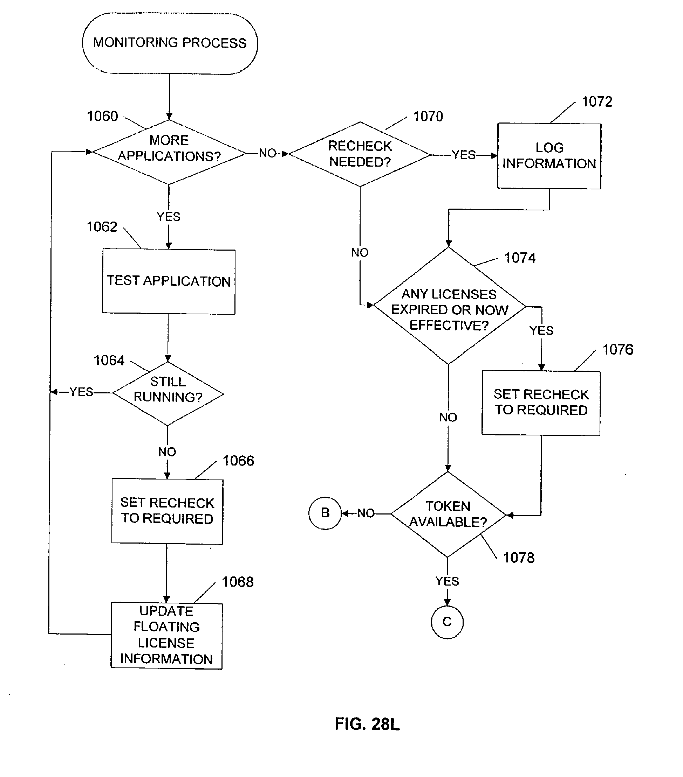

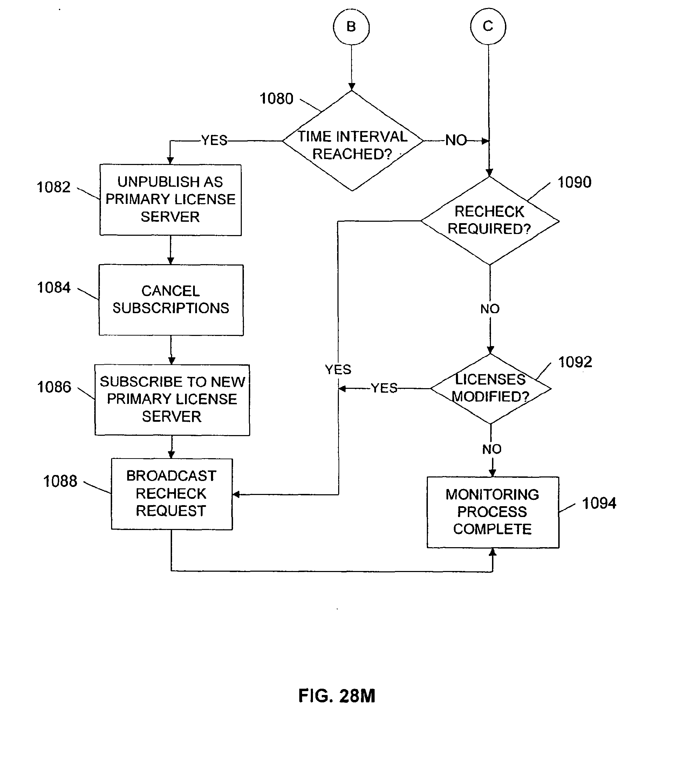

FIG. 28 illustrates a license server including a license control file and a software licensing authentication token according to one embodiment of the invention.

FIGS. 28A - 28D illustrate examples of license key files according to various embodiments of the invention.

FIG. 28E illustrates a method of initializing the license server of FIG. 28.

FIG. 28F illustrates a method of activating the license server of FIG. 28.

FIG. 28G illustrates a method of operating the license server of FIG. 28 as a backup license server.

FIG. 28H illustrates a method of updating the license server of FIG. 28 when the license server operates as a backup license server.

FIG. 281 illustrates a method of processing get-key requests with the license server of FIG. 28.

FIGS. 28J and 28K illustrate a method of processing activation authorization requests with the license server of FIG. 28.

FIGS. 28L and 28M illustrate a method of monitoring the state of license permissions with the license server of FIG. 28.

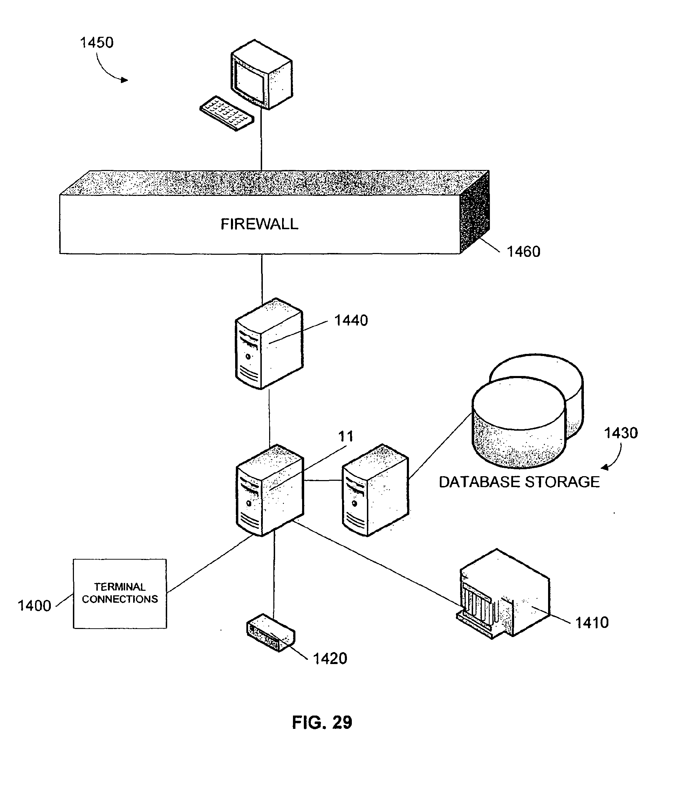

FIG. 29 illustrates an embodiment of the computer system architecture of FIG. 1 including a single server.

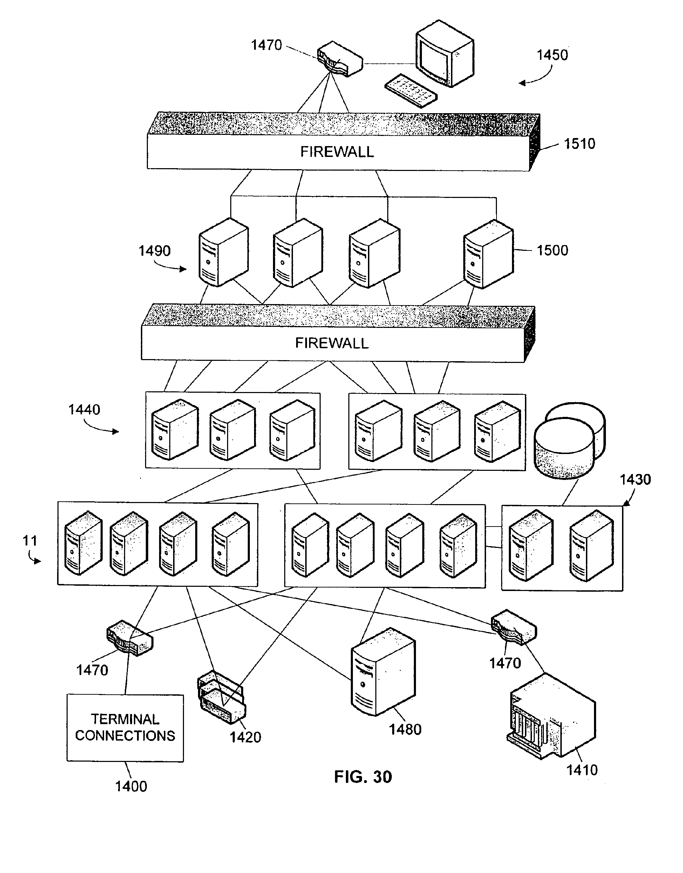

FIG. 30 illustrates an embodiment of the computer system architecture of FIG. 1 including multiple cluster servers.

### DETAILED DESCRIPTION

Before any embodiments of the invention are explained in detail, it is to be understood that the invention is not limited in its application to the details of construction and the arrangement of components set forth in the following description or illustrated in the following drawings. The invention is capable of other embodiments and of being practiced or of being carried out in various ways. Also, it is to be understood that the phraseology and terminology used herein is for the purpose of description and should not be regarded as limiting. The use of "including," "comprising" or "having" and variations thereof herein is meant to encompass the items listed thereafter and equivalents thereof as well as additional items. The terms "mounted," "connected" and "coupled" are used broadly and encompass both direct and indirect mounting, connecting and coupling. Further, "connected" and "coupled" are not restricted to physical or mechanical connections or couplings, and can include electrical connections or couplings, whether direct or indirect.

In addition, it should be understood that embodiments of the invention include both hardware and software components or modules that, for purposes of discussion, can be illustrated and described as if the majority of the components were implemented solely in hardware. However, one of ordinary skill in the art, and based on a reading of this detailed description, would recognize that, in at least one embodiment, the electronic based aspects of the invention can be implemented in software. As such, it should be noted that a plurality of hardware and software based devices, as well as a plurality of different structural components can be utilized to implement the invention. Furthermore, and as described in subsequent paragraphs, the specific configurations illustrated in the drawings are intended to exemplify embodiments of the invention and that other alternative configurations are possible.

Embodiments of the invention provide a computer system having a novel architecture. In some embodiments, the computer system architecture defines a structure for financial transaction processing systems. It should be understood, however, that the structure illustrated and described below can be applied to various types of computer systems for use in various applications.

FIG. 1 schematically illustrates computer system architecture 10 according to one embodiment of the invention. In some embodiments, the computer system architecture 10 can be embodied as a financial transaction processing system (hereinafter "the system") 10. As shown in FIG. 1, the system 10 can include a foundation system 12, a configuration subsystem 14, one or more applications 16, and a monitoring subsystem 18. In some embodiments, the foundation system 12 includes libraries, hardware interface(s), and other platform-dependent system components. The foundation system 12 can execute and/or interface with an environment or platform 19. The environment 19 can include the hardware and/or software (e.g., an operating system) included in a processing device or a component included in the system 10, such as a server. The foundation system 12 can include structures and standards for building the configuration subsystem 14, the applications 16, and/or the monitoring subsystem 18. In some embodiments, the configuration subsystem 14, the applications 16, the monitoring subsystem 18, and/or any additional applications and subsystems built on the foundation system 12 are platform-independent.

The applications 16 can include subsystems and applications included in the system 10 that perform functions of the system 10. For example, the applications 16 can include one or more components and applications that provide financial transaction processing. As previously stated, however, the applications 16 can include applications or components configured to provide various types of processing and functionality other than financial transaction processing.

In some embodiments, the functionality of the system 10 (e.g., the functionality of the applications 16, the monitoring subsystem 18, and the configuration subsystem 14) can be configured and controlled by infonnation stored in and managed by the configuration subsystem 14. As shown in FIG. 2, the configuration subsystem 14 can include a configuration database 20. The configuration database 20 can include a relational database that stores data used to configure and run the system 10. In some embodiments, the structure of the configuration database 20 can be designed to use relationships between different types of configuration data and to eliminate the storage of duplicate data. The configuration subsystem 14 can also include a database abstraction layer 22 that provides an interface between the configuration database 20 (where configuration data can be stored in rows and tables) and other components of the configuration subsystem 14 (where data can be managed as objects). The database abstraction layer 22 can convert data as needed from one format to another and can separate the logic of the configuration subsystem 14 from the details of the structure of the configuration database 20.

As shown in FIG. 2, the configuration subsystem 14 can include an object definitions database 25. The object definitions database 25 can define objects (or related data) that are stored in the configuration database 20. In some embodiments, the configuration subsystem 14 includes a configuration metadata database 26. The configuration metadata database 26 can include information (i.e., metadata) about the structure of the configuration data when viewed and manipulated as objects by a configuration management application 27 and/or other applications 16 of the system 10. A metadata generation utility 28 can create initial or default metadata based on the data stored in the configuration database 20 and/or information stored in the object definitions database 25. The default metadata can be stored to the configuration metadata database 26. The configuration subsystem 14 can also include a configuration metadata management application 30 that allows system users to modify the default configuration metadata. In some embodiments, changes to configuration metadata can be saved in a metadata database independent of the generated default metadata so that metadata changes are not lost if the metadata generation utility 28 updates the default metadata. Using the configuration metadata management application 30, system users can manipulate configuration metadata in order to change the way the configuration data management application 27 displays and obtains configuration data. For example, the configuration metadata can define what configuration data is to be displayed to a particular system user. In some embodiments, the configuration metadata management application 30 can include a web-based application.

The configuration data management application 27 allows system users to create, manage, and retire configuration data in order to build and maintain the system 10. In some embodiments, as described above, the configuration data management application 27 includes a web or browser-based application, and web pages or forms displayed with the configuration data management application 27 can be generated from the configuration metadata set by default with the metadata generator utility 28 and/or set by a system user with the configuration metadata management application 30. In some embodiments, the configuration subsystem 14 can include a configuration user interface ("UI") generator utility 38 that uses the configuration metadata to generate a user interface, such as a web page or form to be displayed with the configuration management application 27. The configuration management application 27 can add configuration data from the configuration database 20 to the user interface and can display the user interface to a system user.

As shown in FIG. 2, the configuration subsystem 14 can include a data import utility 40 and a data export utility 42. The data import utility 40 can import configuration data from an external "load file" 43 into the configuration database 20, and the data export utility 42 can export data into an external "load file" 43 from the configuration database 20. In some embodiments, the data import utility 40 can check imported data for consistency and correctness before storing the configuration data in the configuration database 20. The configuration subsystem 14 can also include a consistency check utility 44 that verifies that data stored in the configuration database 20 is complete and consistent.

The configuration system 14 can include one or more extract utilities 46, which can include utilities to extract configuration data from the configuration database 20 in order to obtain configuration data needed by applications 16 of the system 10 ("configuration extracts 47"). The extract utilities 46 can convert configuration data from a format used in the configuration database 20 to a format used by individual components of the system 10.

The configuration subsystem 14 can also include an extract refresh or update function 50. In some embodiments, the extract refresh function 50 obtains and applies configuration extracts 47 for one or more applications during start-up of the system 10. The extract refresh function 50 can also refresh or update configuration extracts 47 for one or more applications 16 while the system 10 is running. Configuration extracts can be refreshed due to a manual console command, a timed event, etc. Similarly, the configuration subsystem 14 can include an immediate extract refresh or update function 52. In some embodiments, configuration data can require updating throughout the system 10 as soon as it is available. In these situations, the immediate extract refresh function 52 can provide updated configuration data to applications quickly without waiting for an updated configuration extract 47 to be created.

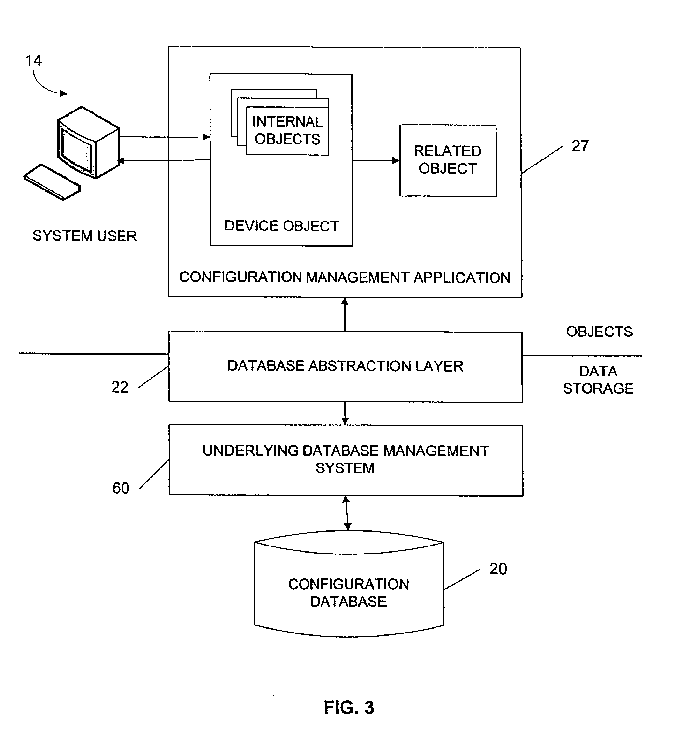

FIG. 3 illustrates object-oriented functionality of the configuration subsystem 14 according to one embodiment of the invention. The configuration management application 27 includes an object-oriented configuration system that employs a rules-based workflow management feature or capability in order to attempt to control the actions of multiple system user roles with varying skill sets. System users can modify the functionality of the system 10 using customizable rules without changing the underlying or base programming code of the system 10.

The object-oriented nature of the configuration subsystem 14 and the corresponding configuration management application 27 allows system users to work with familiar business objects, such as financial institutions, devices (e.g., ATMs), and processing networks, rather than working with the structure of an underlying database used to store the configuration data. In some embodiments, the configuration subsystem 14 is independent of and isolated from the details of how the data is stored on any database system.

Unlike most configuration systems that concentrate on data within a configuration repository, or an underlying data file, the configuration subsystem 14 concentrates on objects represented within the configuration system 14.

The system 10 may handle hundreds of different types of objects including objects representing financial institutions (e.g., banks), processing networks (e.g., Visa or MasterCard), devices (e.g., ATMs), transaction routing requirements, dispute cases, etc. Each type of object is defined by an object class that defines the data the object will use and the processing it can perform when generated or instantiated.

System users can be more familiar with objects processed within the system 10 than with the structure of underlying tiles used to store the infonnation about objects. Therefore, an object-oriented configuration management system can be easier to understand than another configuration system that deals directly with the underlying data files.

Separating an object view of configuration data from the underlying data storage mechanism can be exemplified by the database abstraction layer 22, which separates the use of an underlying configuration management system 60 and the configuration database 20 from the configuration management application 27 that allows individual system users to use different data storage facilities within a single standard configuration management application 27.

In addition to the physical objects described above (i.e., the objects defined in the object definitions database 25), the configuration subsystem 14 can store rules used in the system 10. By storing rules in the configuration subsystem 14, system users can modify processing logic of the system 10. In some embodiments, executable code for each rule resides outside the configuration subsystem 14, but the configuration data used by each rule, including the order in which rules are executed, can be controlled through the configuration subsystem 14. Thus, the objects described here can relate to the applications 16, transaction routing rules, workflow management, and other non-physical objects as well as physical objects as described above.

In some embodiments, the object definitions stored in the object definitions database 25 include programming code for validating and editing configuration data included in an object. Using the programming code for validating and editing configuration data, the configuration subsystem 14 can import and validate configuration data in batch operations, online operations, and in manual entry operations using substantially similar programming code (e.g., programming code based on the validation and editing programming code included in the object definitions) for data validation.

Many systems provide a manual process for system users to enter and edit configuration data. The configuration subsystem 14 also provides the ability to enter and edit configuration data for automated and online processes.

As described above with respect to FIG. 2, the configuration subsystem 14 may import configuration data through a batch-based process from external configuration load files 43, through real-time processing of online transactions, through manual operations by an external operator using a manual user interface (e.g., the configuration management application 27), and/or through other import means, which may become available in the future.

The configuration subsystem 14 verifies the consistency and accuracy of imported data regardless of how it is obtained. In some embodiments, the configuration subsystem 14 places data editing and validation rules within programming code of the objects that will ultimately contain and use the configuration data in the system 10. Each object can implement a validation process (a "validation method") that verifies that configuration data included in the object is consistent and accurate. If the validation method does not verify that configuration data included the object is consistent and accurate, the validation method can generate an error-reporting object that indicates incorrect data. The error-reporting object can also indicate how to fix incorrect data. In some embodiments, the configuration subsystem 14 does not store configuration data in the configuration database associated with an object, if the object does not validate the configuration data. Objects that include other objects (i.e., internal objects) can execute a validation method associated with each internal object and can combine any reported errors into a single error-reporting object. In some embodiments, objects can include internal objects to any level, and each object at each level can be responsible for validating its own configuration data with its own validation method.

To provide as much data validation as quickly as possible for system users entering and maintaining configuration data through a user interface (e.g., the configuration management application 27), the configuration system 14 can provide editing and validation information directly on the user interface so that the user interface can display error messages immediately. In some embodiments, each object can implement a validation requirements process (a "required validation method") that instructs a user interface, or another part of the configuration subsystem 14 requiring such validation information, how to perform required data validation operations and what errors to display when validation fails based on the validation method. The user interface builds data editing and validation as provided or instructed by an object into each page or form it displays so that errors can be identified directly on the user interface without waiting for the configuration subsystem 14 to send entered data back to an object within the configuration subsystem 14 for validation. Internal objects can also implement validation methods. In some embodiments, internal objects send their validation methods to a parent or broader object, and a highest parent object combines the validation methods into a single message that it can send to a user interface, or to another part of the system 10 that requires information on data validation.

In some embodiments, the user interface can provide multiple levels of data validation. A first level of data validation can check for error conditions directly on the user interface, and can allow system users to correct errors. A second level of data validation can execute one or more validation methods of one or more objects using the configuration subsystem 14. The validation methods recheck data initially checked on the user interface and perform additional checks. The second level of data validation can return errors back to the user interface for correction. Providing multiple levels of data validation can provide immediate data validation directly on the user interface and can provide additional validation as well as verifying that the validation performed by the user interface is correct before committing new or edited configuration data to the configuration database 20. Multiple levels of data validation can provide a fail-safe check on possible errors in the user interface and prevent errors in configuration data obtained from any source from being stored in the configuration database 20.

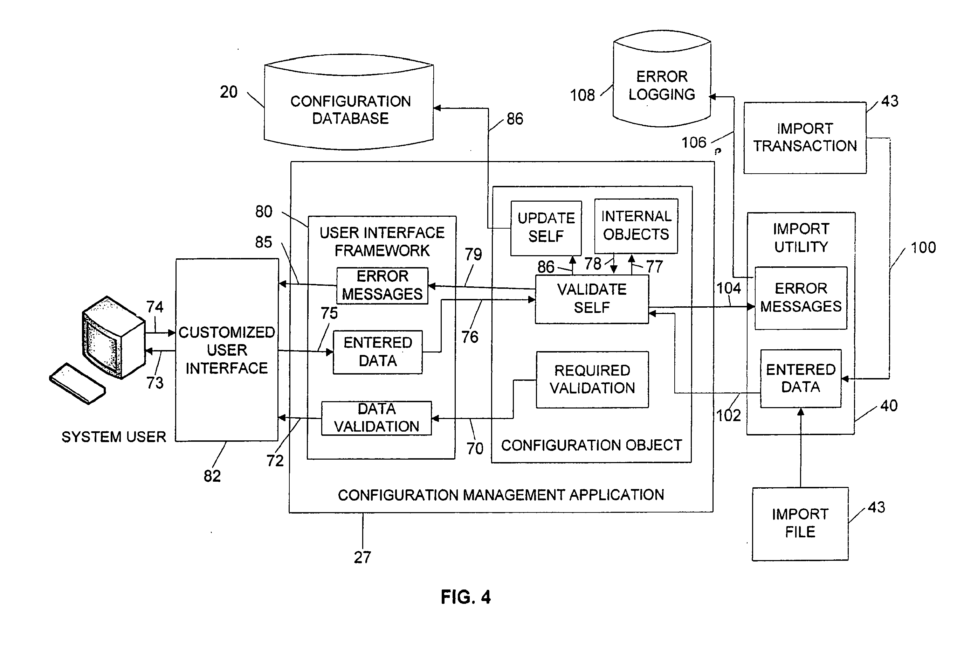

FIG. 4 illustrates a process of obtaining and validating configuration data from a manual entry process and an automated entry process according to one embodiment of the invention. Manual configuration data updates through the configurable user interface are shown on the left side of FIG 4. At a first step of the manual entry process, the configuration subsystem 14 (e.g., the configuration management application 27) retrieves an object to update or creates a new object to be initialized (step 70). The configuration subsystem 14 also obtains validation information for the data included in the object. If the manual entry process includes updated configuration data, the configuration subsystem 14 obtains current or existing configuration data included in the object.

At a second stop of the manual entry process, a user interface framework application or module 80 uses the validation information (and the current configuration data if application) to build a customized user interface 82 for the retrieved or created object (step 72). In some embodiments, the customized user interface can include a web page or a form displayable with a browser application.

In some embodiments, the user interface framework module 80 does not directly use the validation information (i.e., the validation method code) included in an object to edit entered configuration data, but implements its own programming code to implement validation requirements of the object. The user interface framework module 80 can also include logic to implement common validation required for objects. In some embodiments, the customized user interface 82 can also be configured to a particular role or security settings of a system user manually entering configuration data. After the customized user interface 82 is generated, the customized user interface is displayed to a system user (step 73).

At a fourth step of the manual entry process, a system user interacts with the customized user interface 82 and provides configuration data (step 74). As described above, the customized user interface 82 can provide a first level of data validation. Any errors identified in the first level of data validation can be immediately indicated to the system user.

When entered configuration data passes the first level of data validation, the system user submits the configuration data entered in the customized user interface 82 (step 75). The entered configuration data is presented to the original object retrieved or created in the configuration subsystem 14 for a second level of data validation (step 76). As described above, objects can pass entered configuration data related to each internal object for validation (step 77) and can combine the results of the validation methods of any internal objects with the results of its validation method and determine if the configuration data is correct (step 78).

If the configuration data is not correct, an object can pass an object containing one or more error messages to the user interface framework module 80 (step 79). The object containing the error messages can instruct a system user how to correct incorrect configuration data.

The user interface framework module 80 builds another customized user interface 82 that includes the previously entered configuration data and the error messages included in the returned object (step 85). The customized user interface 82 is then displayed to a system user (step 73). The system user corrects the identified errors and resubmits the entered configuration data (step 74). This process continues until the configuration data is validated at both the first level of validation and the second level of validation or until a system user stops attempting to update configuration data.

Once the validation methods within an object have validated the entered configuration data, the object updates its image (i.e., data) in the configuration database 20 (step 86).

Automatic configuration data updates through batch or online updates are shown on the right side of FIG. 4. In a first step of an automated entry process, a batch or online import utility 40 obtains configuration data (i.e., configuration load files 43) to add to or update in the configuration database 20 (step 100).

After the import utility 40 obtains configuration data, the incoming data is presented to existing objects or new objects for validation (step 102). Each object executes its validation method. An object with internal objects can pass configuration data related to each internal object to that object and each internal object can execute it own validation method, and the object can combine the results of the internal objects' validation methods with the results of its own validation method and determine if the imported configuration data is correct (step 78).

If the imported configuration data is not correct, the object passes an object containing one or more error messages to the import utility 40 (step 104). The error messages included in the returned object can instruct a system user how to correct incorrect configuration data. In some embodiments, the import utility 40 can disallow the update or addition of an object including errors. The import utility can log errors to an error log or database 108 (step 106). Otherwise, once the validation methods within an object have validated the imported configuration data, the object updates its image (i.e., data) stored in the configuration database 20 (step 86).

As described above with respect to FIG. 2, a system user can use a configuration metadata management application 30 to configure customized user interfaces 82 displayed to system users in order to obtain and/or edit configuration data. A system user can edit and manage configuration metadata, stored in the configuration metadata database 26, in order to present certain data elements that the system user associates with one or more system user roles so that each system user manages only the configuration data for which they are responsible for.

Customized user interfaces 82 for manually entering and updating configuration data provide the ability to modify displayed fields and functions provided on a user interface each time the customized user interface 82 is displayed to a system user. For example, the fields and functions displayed by a customized user interface 82 can be controlled by a role or security profile of a system user. A role and security profile of a system user can indicate what permissions, privileges, and skill sets a system user has, and by user interface configuration rules, which permissions, privileges, and skill sets a system user can modify. Different customized user interfaces 82 for different system user roles can provide different customized user interfaces 82 to system users filling different roles. For example, an object representing an ATM device may contain data defining the business relationships with a financial institution supporting the ATM device, types of cards the ATM device supports, cash limits, and networks with which the ATM device can operate. The object may also contain data defining technical details of how the device is configured, such as communications protocols used to connect to networks, different types af bills the ATM device can dispense, availability of a deposit function, and details of instructions displayed on a screen of the ATM device. To provide configuration data for the device, a first system user (performing the role of a business analyst) can see a customized user interface 82 containing business elements of the device, a second system user (performing the role of a communications technician) can see a customized user interface 82 containing technical communication elements, and a third system user (performing the role of a device manager at a financial institution supporting the device) can see a customized user interface 83 containing elements needed to control a display or screen of the ATM device.

As described above, the configuration metadata management application 30 can allow system users to modify configuration metadata and/or rules in order to enable, disable, require, and/or hide individual fields and features on a particular customized user interface 82 displayed to a system user. By building customized user interfaces 82, a system user can remove a field or a feature from a customized user interface 82 associated with one system user role and can enable a field or feature for a different system user role. The ability to disable and enable fields and/or features by changing the configuration metadata and/or associated rules, can allow system users to determine what fields and features they want to associate with each system user role without changing underlying programming code of the system 10.

In some embodiments, for objects, such as simple objects, a system user can create one or more customized user interfaces 82 from a single an all-inclusive user interface. When entering configuration data for an object, such as objects representing an ATM device, a system user may deal with multiple objects at one time. For example, an object representing an ATM device can include an object representing canisters of bills to be dispensed and an object representing a depository for depositing cash and checks. In some embodiments, customized user interfaces 82 can also be internalization and localization in order to provide international customized user interfaces 82.

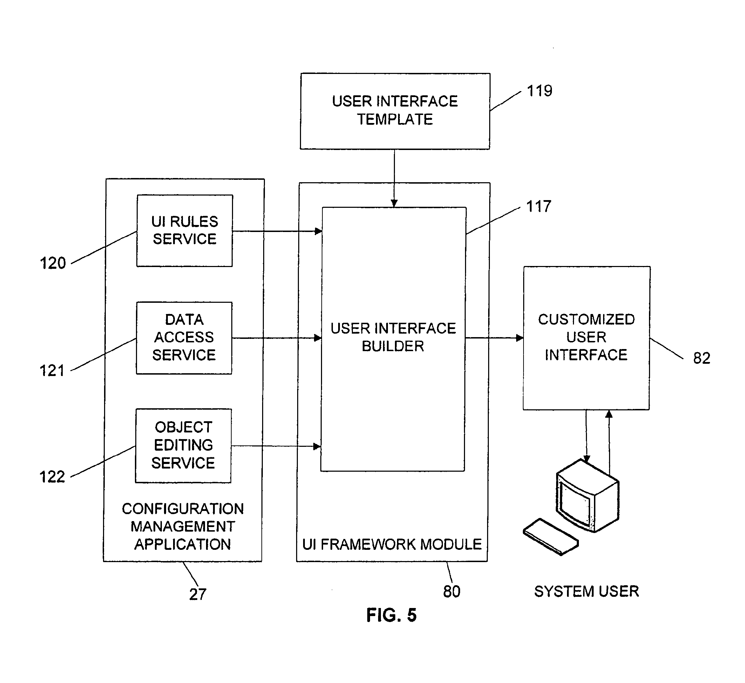

FIG. 5 illustrates a method of generating customized user interfaces 82 according to one embodiment of the invention. As shown in FIG. 5, the user interface framework module 80 can build a customized user interface 82 (e.g., using a user interface builder module 117). In some embodiments, the user interface framework module 80 uses a user interface template 119 to create a customized user interface 82. The user interface framework module 80 can also use services provided from the configuration management application 27 and/or the configuration metadata management application 30 to build a customized user interface 82. For example, the user interface framework module 80 can use a user interface rule service 120, a data access service 121, aud/or an object editing service 122.

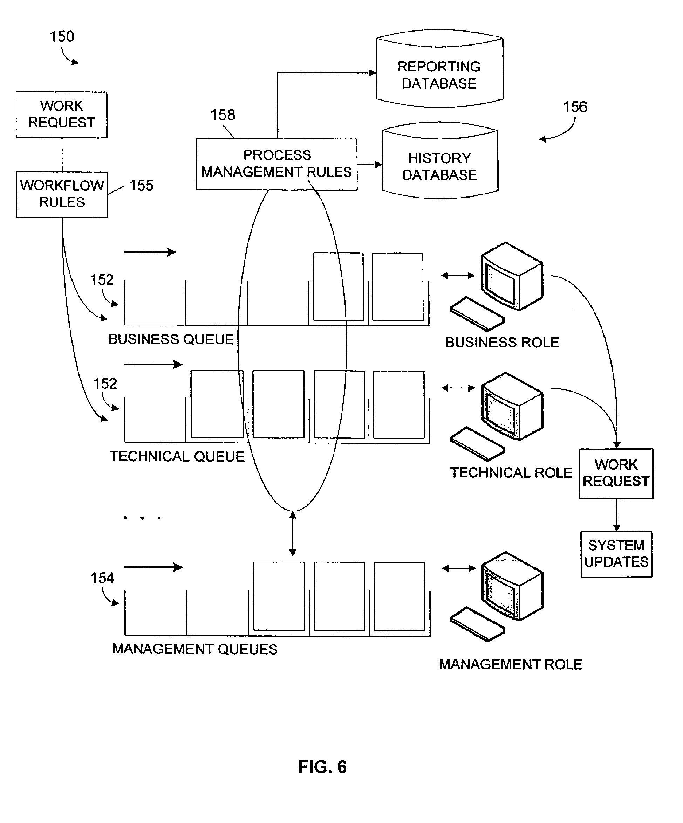

In some embodiments, the configuration subsystem 14 can include a workflow management feature that allows the system 10 to gather information from multiple system users independently, either at separate times or simultaneously, and to combine multiple entries into a complete picture of objects being configured. FIG. 6 illustrates a workflow management feature 150 of the configuration subsystem 14 according to one embodiment of the invention. The workflow manager feature 150 can include workflow controls, such as work queues 152, to align pending work with individual system users or roles, prioritize work, escalate scheduling problems, and report the configuration management process for analysis and history.

The workflow management feature 150 allows a system user to set workflow rules 155 when configuring the system 10. For example, a system user can set an order in which system users should perform configuration activities. Separate activities can be queued and prioritized for different system user roles as defined above, and may be processed in a specific order or simultaneously. Separate work queues 152 can schedule work for separate system user roles. In some embodiments, the workflow management feature 150 allows partial completion of configuration data for an object and tracks a process needed to complete configuration data of the object.

The workflow management feature 150 can include one or more process management queues 154 that handle the escalation of scheduling and/or other problems for review and resolution of workflow inefficiencies and errors. The workflow management feature 150 can also include reporting features 156 that can present a status of current configuration activities and/or tasks and can present information regarding the configuration subsystem 14 for analysis and history.

In some embodiments, system users can modify system user roles, the process management queues and related priorities and trigger conditions used to manage work, and reporting options by editing process management rules. The workflow management feature 150, in conjunction with a security system of the system 10, can also allow system users to move configuration management functions to customers or their customers' customers, as appropriate, and to manage the process required to move the configuration management functions to a customer in order ensure that configuration data is entered accurately and/or on time.

Some objects can contain configuration data that rarely changes from one instantiation of an object to another. To provide default or common information, the configuration subsystem 14 can provide "model objects." The model objects are not part of an active configuration repository of a system user but include a model of how to build a "standard" object. Model objects can be used to fill in commonly used values, and to default these values on user interfaces displayed to system users when manually entering configuration data. The configuration subsystem 14 can provide default values from model objects to pre-fill as much of standard manually entered data as possible. System users can change the default values of the model objects as needed. In some embodiments, system users can build model objects for any objects in the configuration database 20 and can set the default values.

Model objects can specify locked default values that should not be changed, and customized user interfaces 82 can be configured not to let system users change locked default values. In some embodiments, system users can create an "expert" role and provide a customized user interface 82 that displays locked defaulted values in order to allow changes to be made to locked default values by a system user fulfilling an "expert" role.

The configuration subsystem 14 can include processes to extract and package configuration data needed by applications 16, to update or "roll in" changes while the system 10 is running, to undo or "back out" changes if they cause problems, and to track changes and related effects for analysis and history.

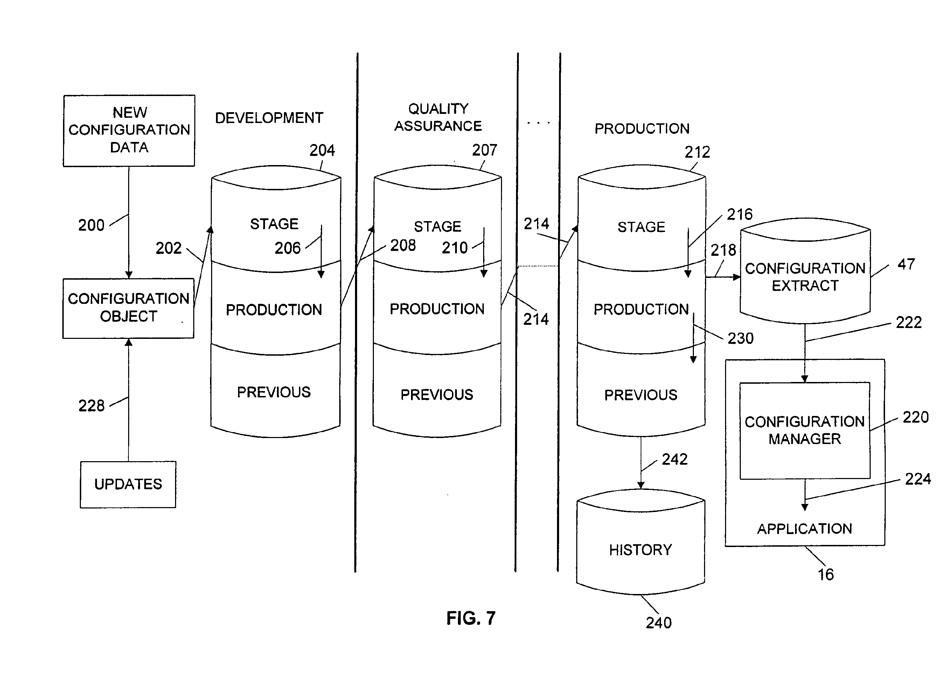

In some embodiments, the configuration subsystem 14 provides features to manage a lifecycle of any given piece of data. FIG. 7 illustrates a process of data lifecycle management according to one embodiment of the invention.

A first step in a data lifecycle includes the creation of a new configuration object with new configuration data (step 200). A second step in the data lifecycle includes storing the configuration object using a managed change request that places the configuration object into a "staged" status in a development configuration repository 204 (step 202).

After the configuration object is staged, the configuration object is promoted to a "production" status in the development configuration repository 204 (step 206). Next, the configuration object is promoted to additional repositories, such as a quality assurance repository 207, an acceptance testing repository, and/or other repositories associated with pre-production processes (steps 208 and 210).

After any pre-production processes are performed, the configuration object is installed into a production repository 212 in a "staged" status (step 214). Next, the configuration object is promoted to a "production" status within the production repository 212 (step 216). Once the configuration object has a "production" status in the production repository 212, the configuration object can be extracted into one or more configuration extracts (step 218), which are tailored to the needs of various applications 16.

Once the configuration data is extracted into a configuration extract, the configuration object is loaded into a configuration manager module 220 (step 222), and the configuration data included in the configuration object is used productively within one or more applications 16 (step 224).

As applications 16 of the system 10 use the configuration data included in the configuration object, the configuration data can be updated (step 228). Updated configuration data can follow the data lifecycle as described in the above steps (i.e., step 202, 206, 208, 210, 214, and 216).

Once updated configuration data is promoted to a "production" status within the production repository 212, the previous or replaced configuration data can be promoted to a "previous" status (step 230). The previous configuration data can remain available in the production repository 212, and, in some embodiments, the previous configuration data can be rolled back into production (re-promoted to a "production" status) in order to help alleviate problems caused by the updated configuration data.

Configuration data with a "previous" status can also be deleted from the system 1 U. In some embodiments, configuration data with a "previous" status can be deleted and/or archived to a history file or database 240 as inactive configuration data when more recent configuration data is promoted to a "previous" status (step 242).

A configuration change request process can allow system users to move one or more independent or inter-related and dependent updates into an appropriate repository (e.g., development, quality assurance, production, etc.) at any given time. In some embodiments, configuration objects can include effective dates that allow system users to move configuration objects to a "production" status before they should be effective. The configuration objects can remain ineffective or inaction until their effective date.

The configuration subsystem 14 provides a standard application programming interface ("API") that applications 16 can use to load and manage configuration data they use through common reusable code. In addition, the configuration subsystem 14 provides the ability to define any combination of configuration data in any way that may be appropriate for specific applications 16 without being limited by the standard configuration API. The configuration subsystem 14 can provide standard formats for storing, retrieving, and using configuration data within applications 16 of the system 10. In some embodiments, the configuration subsystem 14 also provides a set of programming "classes," which define objects needed to perform a set of standard configuration management functions within each application 16. The programming classes define a set of API definitions that applications 16 can use to access configuration data without having to manipulate configuration data directly.

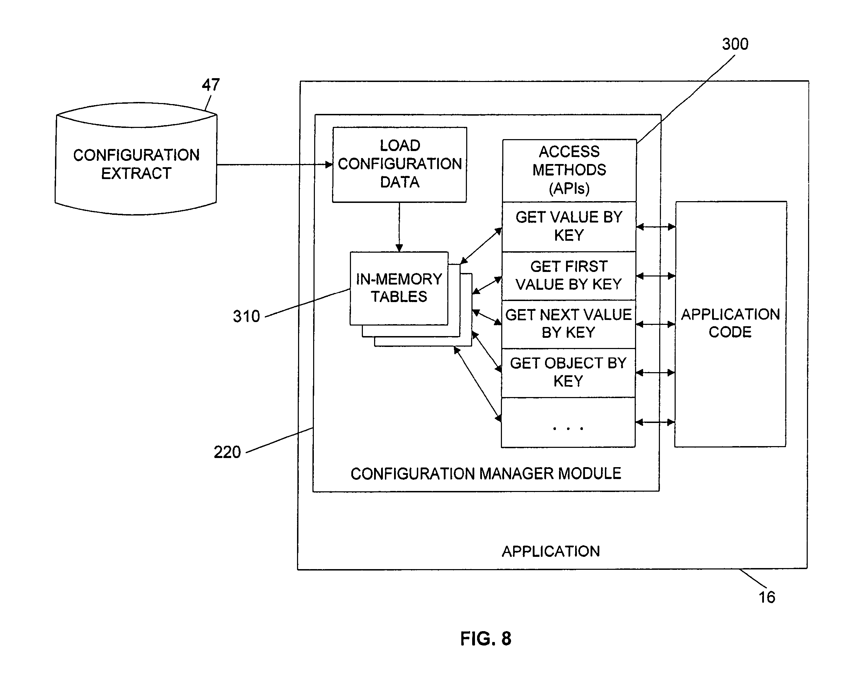

FIG. 8 illustrates an application 16 and configuration management APIs 300 according to one embodiment of the invention. The configuration management APIs 300 provide a small, common, and/or reusable data management facility within the configuration manager module 220 of an application 16. An application 16 calls for and uses configuration data as needed using the configuration management APIs 300 without having to obtain knowledge about how the configuration data is stored or organized within the configuration subsystem 14 and/or the configuration manager module 220.

In addition to standard functions, the configuration subsystem 14 provides a mechanism for custom formatting and management of configuration data. For example, some configuration data is most useful when loaded into large or complex tables 310 within the memory of an application 16. Applications 16 that can make use of such specific data formatting and processing can also define a format and processing for configuration data as needed.

As shown in FIG. 1, the system 10 includes a monitoring subsystem 18. The monitoring subsystem 18 can obtain and act upon information provided throughout the system 10. Monitoring processing rules, similar to transaction processing rules and workflow management rules, can enable the monitoring subsystem 18 to act directly upon many reported events and status changes without manual intervention. Escalation rules can enable the monitoring subsystem 18 to alert a system user and/or another monitoring system of conditions it cannot handle directly. In addition, the monitoring subsystem 18 can instruct a problem management subsystem 18 to track and manage ongoing problem cases. In some embodiments, workflow features (as describe above with respect to FIG. 6) can continuously monitor and escalate ongoing problem cases as necessary. In some embodiments, the system 10 can provide any or all of the features described above in response to an event depending on what associated monitoring rule objects require and/or perform. In some embodiments, the monitoring subsystem 18 can accept manually entered commands or command scripts from a command line interface. The monitoring subsystem 18 can process command scripts directly and/or can submit commands script to an operating system command interpreter.

The monitoring subsystem 18 can also include rules related to system status messages in order to keep track of the health of the system 10. If a status message causes a counter to pass a configurable threshold, the monitoring subsystem 18 can take corrective action or can escalate the condition for manual action as appropriate.

The monitoring subsystem 18 can also keep a history of the reported system conditions and events in order to display history information on demand or to use as a baseline to compare against current conditions and trends. The system 10 can also use the historical data to set thresholds for proactive monitoring as described below.

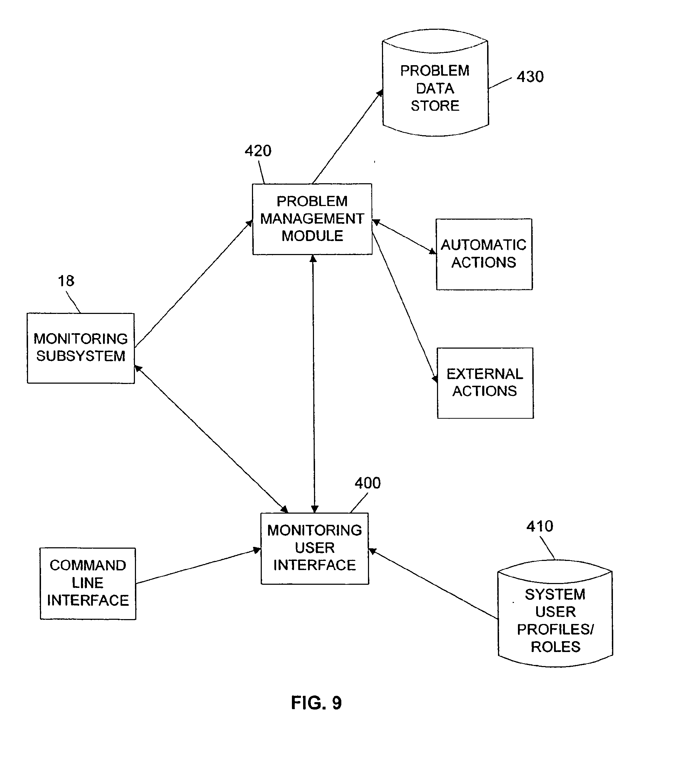

FIG. 9 illustrates functionality of the monitoring subsystem 18 according to one embodiment of the invention. The monitoring subsystem 18 can consume messages, transactions, and events associated with the system 10 as input and can interpret the input and take actions accordingly. In some embodiments, the monitoring subsystem 18 can maintain a history of monitored statistics and events and can provide a monitoring interface user interface 400 for accessing current and historic data. In some embodiments, actions taken by the monitoring subsystem 18 can be configurable as described below.

The monitoring subsystem 18 can provide reactive monitoring that automatically detects an error or exception and notifies an appropriate party and/or takes a self-correcting action. In some embodiments, the monitoring subsystem 18 can provide proactive monitoring and can provide a "dashboard" that shows system status and can be accessed by system users. The dashboard can show a current status, which can include notifications occurring associated with a problem or exception and non-error messages. The dashboard can be displayed to a system user using a web application and/or a specific client application. The monitoring subsystem 18 can passively receive non-error messages generated by components of the system 10, such as transaction logs and/or event logs, which it can use to indicate a status or health of the system 10. The monitoring subsystem 18 can also actively interrogate applications 16 and/or components of the system 10 in order to determine a current state of the system 10.

In some embodiments, the monitoring subsystem 18 can generate one or more entities and one or more current monitored elements ("CMEs"). An entity can be associated with a component (e.g., a logical component or a physical component) being monitored (e.g., an ATM device or a group level identifier, such as a financial institution identifier) with the monitoring subsystem 18. An entity can include one or more attributes, such as a unique label for the entity, an entity type, a rule to start upon updating the entity, a timestamp of a last update of the entity, and a timestamp of initiation of the entity or a last reset of the entity. In some embodiments, the monitoring subsystem 18 can use one or more entity templates to create an entity, and each entity can include an entity type that links the entity to an entity template. Entity types (and corresponding templates) can be configured using the configuration subsystem 14 and/or the monitoring subsystem 18. In some embodiments, the monitoring subsystem 18 includes entity types (and corresponding templates) linked to device entity types (and/or device model entity types), link entity types (e.g., internal links and external links), node entity types (i.e., physical or logical processing components of the system 10), process entity types, and business entity types (e.g., a financial institution).

Each entity can be associated with one or more CMEs. A CME can include an individual element or bucket of data. A CME can include one or more attributes, such as a unique label, data contained in the element or bucket, a rule to start upon updating the CME, a timestamp of a last update of the CME, and a timestamp of initiation of the CME or a last reset of the CME. In some embodiments, a CME can include a timer that alerts the CME of a lack of activity. A CME can generate an event when a timer expires. In some embodiments, the monitoring subsystem 18 can create a CME based on a CME template. Active CMEs used in the monitoring subsystem 18 can be included in a current monitored window ("CMW").

In some embodiments, an entity can be associated with a CME counter element. A CME counter element can store a numeric value that the monitoring subsystem 18 can set, add to, subtract from, reset, compare, and/or increment. An entity can also be associated with a CME consecutive element. A CME consecutive element can store a numeric value that the monitoring subsystem 18 can set, add to, reset, compare, and/or increment. An entity can also be associated with a CME rolling average element that stores a numeric value representing a mean average of one or more CME counters elements. The monitoring subsystem 18 can set, add to, reset, and/or compare the CME rolling average element. In some embodiments, a CME rolling average element includes an attribute that specifies a number of CME counter elements making up the mean average. The number of CME counter elements making up a mean average can be configured using the configuration subsystem 14 and/or the monitoring subsystem 18.

In some embodiments, an entity can also be associated with a CME status Boolean element that stores a Boolean status of an entity (e.g., an ATM device or a group of ATM devices) and a CME status level element that stores a status level as a percentage.

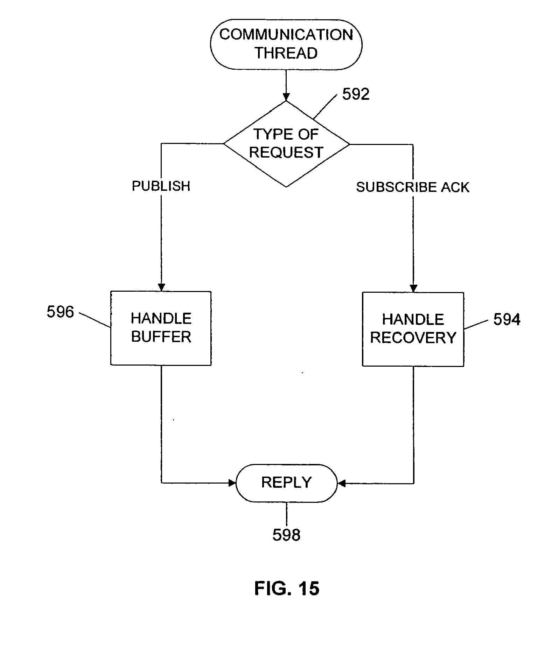

The monitoring subsystem 18 can provide monitoring of transactions, such as electronic financial transactions. To obtain information about transactions, the monitoring subsystem 18 can subscribe to transaction log files (as described below with respect to FIG. 15).

In some embodiments, the monitoring subsystem 18 includes a message mapper. The message mapper can extract accepted or required data from incoming events, information, and log entries. The monitoring subsystem 18 can also subscribe to a monitoring event queue. In some embodiments, applications and components of the system 10 can include a local monitoring agent responsible for configurable system checks and forwarding events to the monitoring event queue. The monitoring subsystem 18 can also monitor change-of-status messages generated by devices and/or device managers, status messages generated by node agents, messages generated when new nodes and/or devices are added to the system 10, and events from devices or device managers that are received out of order.

When the monitoring subsystem 18 receives information about a transaction, the monitoring subsystem 18 can identify one or more entities and/or CMEs to be updated with the event information. The monitoring subsystem 18 can update the entities and/or the CMEs (and/or any associated elements, for example, the CME rolling average element), and can determine if any thresholds associated with the entities and/or the CMEs have been exceeded. In some embodiments, thresholds, such as a number of error messages that can be received from an ATM device before a technician is notified, can be included in CMEs. Thresholds can include an age of a data timer (e.g., a timestamp of a last reset), an inactivity timer (e.g., a timestamp of a last update), a numerical range or limit, an enumerated type value check (e.g., "disconnected"), and/or a Boolean value.

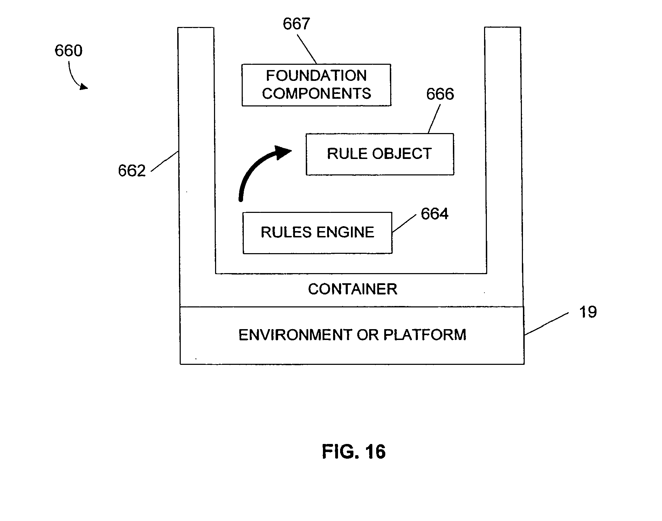

The monitoring subsystem 18 can use a rules engine to execute rule objects (as described below with respect to FIGS. 16 and 17) to interpret incoming events and information. In some embodiments, a rule object can include one or more thresholds that a rule object can check when an entity and/or a CME is updated. As described above, an entity and a CME can include an attribute specifying a rule to execute when the entity or the CME is updated. The specified rule can perform threshold checking. If a threshold is exceeded, a rule object executed with the monitoring subsystem 18 can forward an event and/or a message to a third party, format and send a message or a command to an internal component of the system 10, reset a CME, archive CME data to a monitoring history database or log file, run a system configured script, generate a problem case, etc.

As described above, rule objects executed when an entity or a CME is updated can initiate actions. For example, a rule object can initiate the execution of an operating system script, the generation of a problem case in a problem system, the sending of an internal message or an alert to another system component, the sending of an external message or an alert to another system, and/or the sending of a message or an alert to one or more system users. In some embodiments, messages can be sent to system users via a telephone system (e.g., sending a page or a fax) and/or via a network (e.g., sending an email). In some embodiments, messages and/or alerts can be sent to third party components and systems, such as simple network protocol management protocol ("SNMP") managers.

Rule objects executed with the monitoring subsystem 18 can include rules objects for storing entities and/or CMEs to a database, checking thresholds, rolling or archiving historical monitored events and/or information, resetting entity attributes, CME attributes, and/or CME elements, and performing script or command execution. In some embodiments, rule objects executed with the monitoring subsystem 18 can store entities, CMEs, and/or other information associated with the monitoring subsystem 18 (e.g., monitored events and resulting actions) to a database and/or log file.

As shown in FIG. 9, the monitoring subsystem 18 can include a monitoring user interface 400. The monitoring user interface 400 can display a "dashboard" indicating communications and software health. The "dashboard" can also display threshold values (e.g., approval rates over a link) and monitored entities. In some embodiments, a system user can configure the threshold values and/or the monitored entities displayed by the monitoring user interface 400 using the monitoring subsystem 18 and/or the configuration subsystem 14. In some embodiments, the monitoring user interface 400 can use system user profiles (i.e., roles and/or security settings) 410, to determine whether a particular system user should be allowed to configure threshold levels, monitored entities, and/or have access to other monitoring configuration data.

The monitoring user interface 400 can also include a graphical system health/operations subsystem that provides filtered drill down capability. System users can also use the monitoring user interface 400 to scroll through filtered event lists. In some embodiments, event lists can include tokenized events or information and a system user can filter the event list based on token existence, token identifier, and/or token value.

The monitoring user interface 400 can also generate on-demand displays of statuses. In some embodiments, the monitoring user interface 400 can provide search capabilities that allow a system user to search and receive the status of a particular entity.

As described above, system users can use the monitoring user interface 400 to create, read, update, and delete monitored entities. The monitoring user interface 400 can also allow system users to create, read, update, and delete rules associated with monitored entities. In addition, the monitoring user interface 400 can allow system users to edit monitored entity scripts and/or commands executed according to the rules. As described above, the monitoring user interface 400 can use system user profiles 410 to determine which configuration functionalities are available to a particular system user executing the monitoring user interface 400.

As also shown in FIG. 9, the monitoring subsystem 18 can include a problem management subsystem or module 420. The problem management subsystem 420 can use a problem data store 430 to track problem cases generated and managed with the monitoring subsystem 18. The problem management subsystem 420 can provide an API that allows the monitoring subsystem 18 to create problem cases. In some embodiments, the monitoring subsystem 18 generates a problem case for monitored conditions requiring external effort to resolve. A rules-based workflow manager capability of the configuration subsystem 14 (as described above with respect to FIG. 6) can monitor and trace a problem case to its resolution.

In some embodiments, the system 10 processes and manages context objects. A context object can include information needed to complete a specific transaction, case, or other element of work to be processed by the system 10. Context objects can be considered running or executing instances of a class or a type of object. Each class can contain definitions or data types and programming code for an object. For example, an automated teller machine ("ATM") class may define an ATM machine. The ATM class can define what types of data or information the ATM machine includes, such as the name or other identifier of a financial institution ("FI") that owns or manages the ATM. The ATM class can also define what an ATM machine can do and how it works. The ATM class can also contain the programming code needed to handle ATM processing and define the data that the programming code uses.

When an instance of a class is instantiated or generated ("an object"), each instance of the class includes one or more data types defined by the class, which are set to data specific to a particular object (e.g., a name of a FI managing an ATM machine). The instance of the class also includes the programming code or functionality defined by the class. For example, an object named ATM123 can be an instance of the ATM class and can define a specific ATM machine in a specific location. The ATM123 object can include ATM data related to a specific ATM and can provide processing as defined by the ATM class. In a single application or system there can be many instances of a class.

To generate a context object, the system 10 can extract information from incoming data and place it into an object called a context object. Incoming data can include requests for service from external devices and systems, such as an ATM or a financial institution network. Requests can include financial transactions, such as withdrawing cash from an ATM; manual requests from users who are querying the system for information; or requests for updates and/or modifications from operators running and/or configuring the system 10. The system 10 can encapsulate each request into a context object. In some embodiments, different types of context objects can be used for different types of requests. Each type of context object, however, can inherit a basic form and structure from a base context class. Therefore, once incoming data is encapsulated into a context object, the system 10 can process the context object regardless of a specific type or format of the original incoming data and the type of context object created to contain the incoming data.

While processing context objects, the system 10 can transfer a context object to another component or subsystem of the system 10. In some embodiments, data contained in a context object can also be transmitted to other external systems. The system 10 can use a format called a "tokenized message" to transfer context objects and other information. A tokenized message can include one or more self-defining "tokens." Each token can represent a unit of information. A system component or external application can obtain information from the tokenized message by examining individual tokens included in the message. In some embodiments, a system component or external application obtaining the tokenized message does not need to know the overall or complete structure of the tokenized message, and a system component or external system can search tokens included in a tokenized message for tokens that identify needed or accepted data and can ignore tokens identifying unneeded or unaccepted data. Using tokenized messages can simplify system maintenance and updating since as new data elements are added to a tokenized message, additional code to handle the data change is minimized. For example, to include new data in a tokenized message, components that use the new data can be updated to identify and use the new data included in the message, and components that do not need the new data element can ignore the new data as they ignore other unaccepted tokens.

In some embodiments, the system 10 can also use tokenized messages to save a context object to a logging file and/or a trace file, to move a context object between processes or applications that are implemented in a different programming language (e.g., Java or C++), to send visual information to a user interface for display with a browser application, and/or to construct a configuration extract of configuration information for a specific portion of the system 10 from the configuration subsystem 14.

In some embodiments, applications 16 of the system 10 can use a logger object (an instantiation of a logger class) to write a context object (or other system information) to a log file. The logger object can provide an API that an application calling or instantiating the logger object can use to supply parameters and format a log entry. In some embodiments, a log entry includes a tokenized log entry. Log entries are added to a log file buffer and are written as the log entry buffer becomes full and/or after a predetermined amount of time. In some embodiments, a system user can configure the predetermined amount of time before log entries included in a log file buffer are written to a log file. Log entries can be written to a log file using a log output stream. In some embodiments, the log output stream can process log entries in either direction (i.e., starting with a first log entry in the log entry buffer or starting with a last log entry in the log entry buffer).

Each log buffer can include an entry including a byte length of its contents, a byte offset in a stream, a count of log entries in the buffer, and each log entry added by a logger object. In some embodiments, the byte length of the contents of a log buffer can be included at both ends of a log buffer in order to support processing of a buffer stream in either direction. A log output stream includes the contents of each file in a log set. A log stream can include a sequence of variable length log buffers.

In some embodiments, a log key includes an entry including a logger process name, a logger object name, a file sequence number, a buffer byte offset into a file, and an entry number in the buffer. The log key can be added to a context object to provide a reference to where a corresponding log entry can be found.

The logger object (or the corresponding log class) is configured to write to one or more log file sets. In some embodiments, the logger object is configured to write to one or more log file sets in parallel. Each file set includes a set of files in a directory. The logger object can concatenate a name of the logger object with a file sequence number in order to generate a name of a log file. For example, a logger object named "transactions" instantiated by a process or application named "switch2" generates file names "switch2transaction1.oel" or "switch22transaction9999999.oel," depending on a file sequence number (i.e., the number of log files previously generated). The logger object can save the log files, with the generated names, to directories specified in each log file set.

A logger object can support one or more strategies for executing once it is instantiated by a calling application or process. In a first strategy, an asynchronous strategy, the calling application (or a thread of the calling application) continues processing after the logger object adds a log entry to a log file buffer. In a second strategy, a synchronous strategy, the calling application (or a thread of the calling application) is blocked until a log buffer that the logger objects adds a log file entry to is written or flushed. In a third strategy, an asynchronous secure strategy, the calling application (or a thread of the calling application) continues executing after the logger object adds a log entry to the log entry buffer, and the context object passed to the API is re-queued for further processing once the buffer has been flushed to all file sets.

Applications 16 can subscribe to logger objects. To subscribe to a logger object, an application 16 sends a subscription request to an application process associated with the logger object. In some embodiments, logger objects send details of its current state and buffers logged to each subscribing application (hereinafter "subscriber application"). The subscription request can indicate whether a subscriber applications process is to be treated as synchronous (i.e. equivalent to a file set, suspending the application process until a reply is sent), asynchronous (i.e. fire and forget), or follow-on (i.e. fire and forget but not until the buffer has been flushed to the file sets).

In some embodiments, log entries can be tokenized, and the tokenization method used to create log entries can support multiple versions so that sources and consumers (e.g., applications reading log files and subscriber processes) do not need to be at a same release level or version to communicate and can be software-language independent. Consumers of a tokenized log entry, whether a subscriber application or an application reading a log file, can recreate the logged object (and its contents) by unpacking the tokenized log entry. The format of the tokenized object can be recursive so that internal objects can also be unpacked.

In some embodiments, an application 16 of the system 10 is configured to run one or more logger objects. Configuration data for each logger object can specify a logger class, an API available to an application 16, a roll over size for each log entry or file, a size of a full log buffer, a maximum time to delay a log entry waiting for a log buffer to fill, and a directory path name for each file set.

On startup, a logger object can use a file sequence number one greater than a maximum file sequence number found in any file set. In some embodiments, if a write to a log file fails, a logger object can move to a next file sequence number. A logger object can also move to a next file sequence number if a log file is refreshed because of a failed disc or a network node is returned to service. In some embodiments, a file sequence number existing in each file set differs only in the last buffer written.

If a subscriber application fails (or is stopped), a logger object receives an error when sending a log buffer to the subscriber application. In some embodiments, if a logger object receives an error when sending a buffer to a subscriber application, the logger object removes the subscriber application from a list of subscriber applications maintained by the logger object. On recovery, a failed subscriber application can attempt to reconnect to the logger object. In some embodiments, a subscriber application can determine whether missed log entries should be recovered from log files and, if so, whether this is a background catch-up task or is done before processing new log data.

In some embodiments, a subscribe request remains as an outstanding request as long as the logger object is running, and a subscriber application can detect failed logger objects when it receives a response or failure reply to a previously-sent subscribe request. A subscriber application can attempt to re-establish a connection with the failed logger object and can handle any recovery required.

In some embodiments, logger classes are provided as a Java API and/or a C++ API. A base logger class can include programming code for configuring a logger object, initializing file sets, creating thread objects for each file set and each subscriber application, managing a pool of log buffer objects, coordinating between thread objects and buffer objects, and responding to a command interface.

An event logger class is derived from a base logger class and uses asynchronous logging. Additionally, an event logger class can be configured to filter calling or instantiating application requests based on log level. The event logger class supports an AddEventObject method where an instantiating application identifies an event source and a unique event number along with the parameters relevant to the event. In some embodiments, consumers of log entries logged with the logger object can format log entries based on the unique event number, for example, in order to provide an internationalized message for a user.

A context logger class is derived from a base logger class and uses synchronous logging. The context logger class supports an AddObject method that is passed a context object to be logged. The context object can be updated with a key to a log entry. Each calling thread can wait to be notified that the log buffer has flushed before returning to an application that called or instantiated the logger object.

A trace logger class is derived from a base logger class and uses asynchronous logging. Additionally, the trace logger class can be configured to filter application requests based on a trace level. The trace logger class can also operate in a short mode, which limits the amount of detail required. The trace logger class supports an AddTraceObject method, which is passed a context object to be logged and details regarding why the context object is being traced. Optionally, an application calling or instantiating the trace logger object can pass a list of field names as details to the AddTraceObject so that only a subset of a context object is logged if a logger object is operating in a short mode.

A context worker logger class is derived from a base logger class and uses asynchronous secure logging. The context worker logger class is configured with a name of a thread pool to handle processing. The context worker logger class supports an AddObject method that is passed a context object to be logged. The context object is updated with a key to the log entry. A list of context objects to forward for additional processing is associated with a log buffer. When the log buffer is successfully flushed each listed context object is passed to the thread pool for further processing.

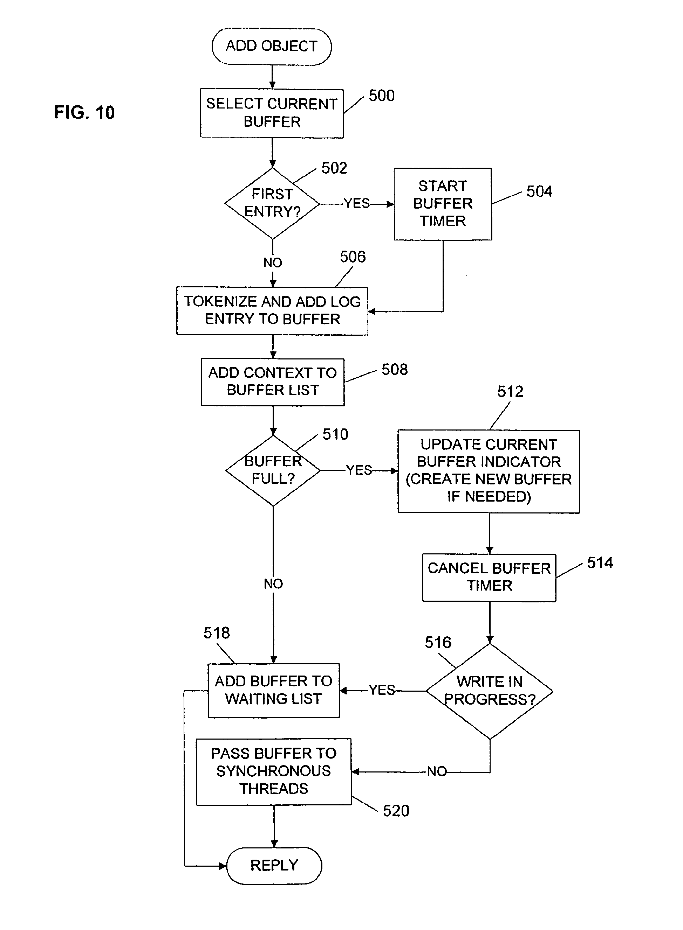

FIG. 10 illustrates a process performed when an application thread calls the AddObject method on a context worker logger object. As shown in FIG. 10 a context worker logger object can select a current buffer (step 500). If a log entry is a first entry in a buffer, the context worker logger object can start a buffer timer (step 504). The context worker logger object can then tokenize and add the tokenized log entry to the buffer (step 506). Next, the context worker logger object can add the context object to a buffer list (step 508). If the buffer is full (longer than a configured size) or the buffer timer has expired (step 510), the context worker logger object can update a current buffer indicator (step 512). In some embodiments, the context worker logger object can create a new buffer if needed.

After the context worker logger object updates the current buffer indicator, the context worker logger object can cancel the buffer timer (step 514). Next, the context worker logger object can determine if a buffer write is in progress (step 516). In some embodiments, only one buffer is used for writing at a time. A number of full buffers, however, can be queued waiting to be written. If a write is in progress, the context worker logger object can add the buffer to a waiting list (step 518). If the buffer is full (step 510) and a buffer write is not in progress (step 516), the context worker logger object can pass the buffer to the synchronous threads (step 520).

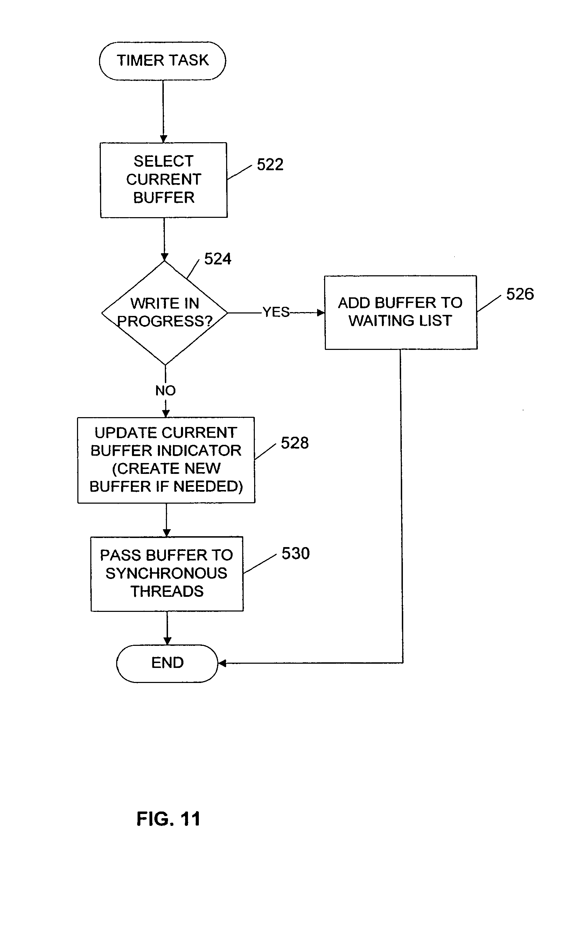

FIG. 11 illustrates a process performed when a buffer timer expires indicating that a buffer is ready for writing. Until previous buffer writes are completed, the buffer ready for writing can have new log entries appended to it. As shown in FIG. 11, a logger object can select a current buffer (step 522) and can determine if a buffer write is in progress (step 524). As described above with respect to FIG. 10, only one buffer can be writing at a time. If a buffer write is in progress (step 524), the logger object can add the current buffer to a waiting list (step 526). Otherwise, if a buffer write is not in progress (step 524), the logger object can update a current buffer indicator or create a new buffer if needed (step 528) and can pass the buffer associated with the expired timer to synchronous threads (step 530).

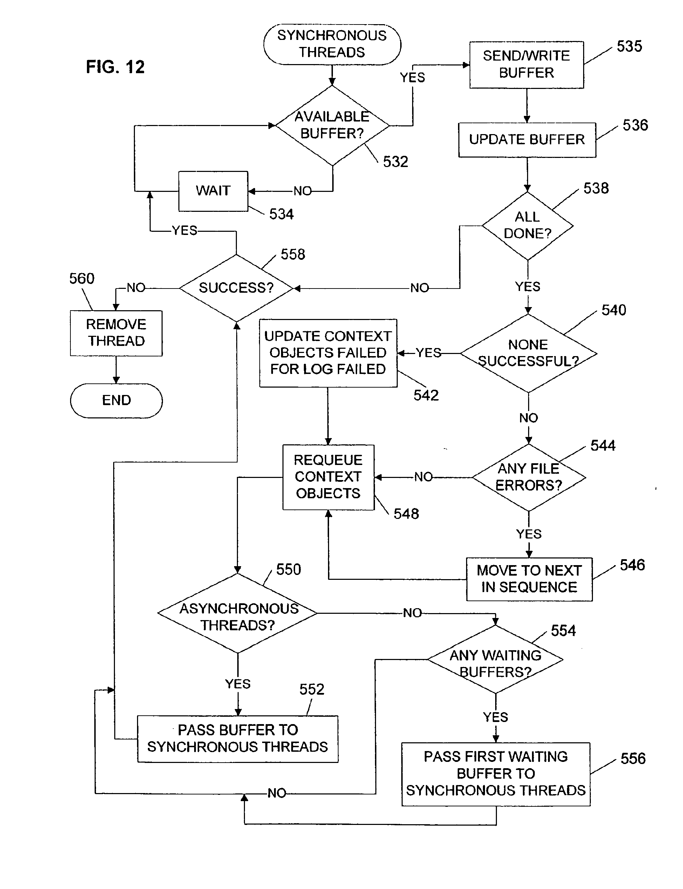

FIG. 12 illustrates a process of handling log file sets and/or synchronous subscriber applications using synchronous threads of a logger object. In some embodiments, the synchronous threads of the logger object wait to be notified of a buffer to write or send to a subscriber application. As shown in FIG. 12, a synchronous thread of the logger object can determine if a buffer is available for sending to a subscriber application or writing (step 532). If a buffer is not available, the synchronous thread of the logger object can wait a predetermined amount of time (step 534) and can then recheck for an available buffer (step 532).

Otherwise, if a buffer is available, the synchronous thread of the logger object can send the buffer or write the buffer (step 535) and can update the buffer in order to inform the buffer of the completed send or write (step 536).

In some embodiments, a last synchronous thread of the logger object to complete a buffer send or write performs post processing (step 538). For example, a last synchronous thread of the logger object can determine if a buffer was not written or sent (step 540). If the buffer was not written or sent, the last synchronous thread of the logger object updates context objects included in the buffer (step 542). Otherwise, if the buffer was written or sent, the last synchronous thread can determine if any log files failed (step 544). If any log file failed, the last synchronous thread can move to a next file sequence number (step 546).

As shown in FIG. 12, if the last synchronous thread determines that the buffer was written or sent (step 540) and that no log files failed (step 544) (if applicable), the last synchronous thread of the logger object can re-queue context objects to a configured pool or queue for further processing (step 548).

Next, the last synchronous thread of the logger object can determine if there are asynchronous threads (step 550). If there are asynchronous threads, the last synchronous thread can pass a buffer to an asynchronous thread (step 552). Otherwise, if there are not any asynchronous threads, the last synchronous thread can determine if there are any waiting buffers (step 554). If there is a waiting buffer, the last synchronous thread can pass a first waiting buffer to synchronous threads (step 556).

As shown in FIG. 12, if a thread is not a last synchronous thread of the logger object (step 538) or if the above post-processing functions, as described above, were performed by a last synchronous thread, a synchronous thread of the logger object can determine whether the buffer send or write was successful (step 558). If the buffer send or write failed, the synchronous thread of the logger object exits (i.e., is removed) after updating a logger objects list (step 560). Otherwise, if the buffer write or send was successful, the synchronous thread of the logger object returns to check for available buffers (step 532).

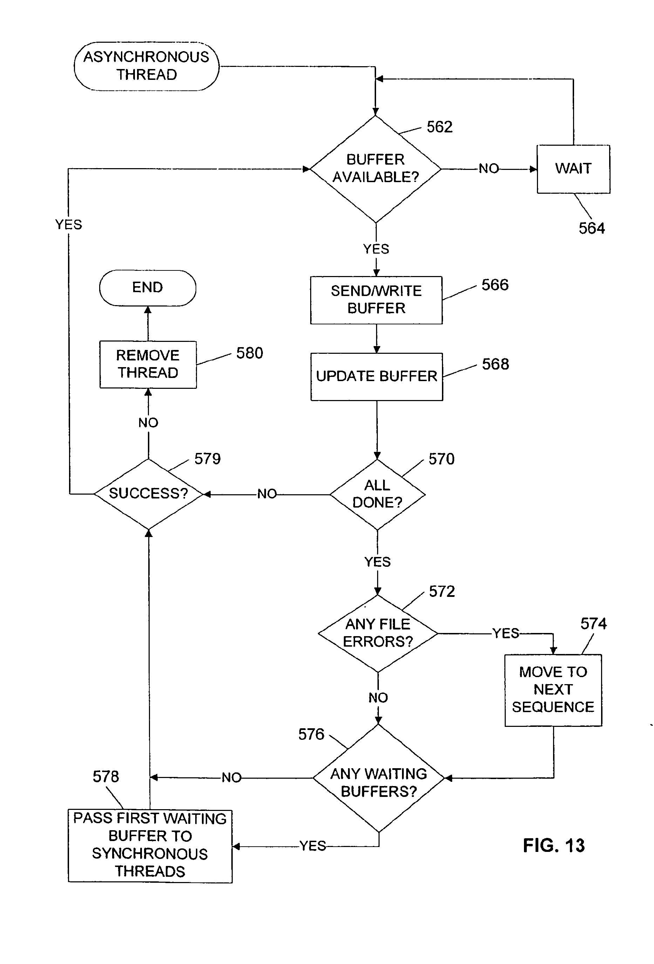

FIG. 13 illustrates a process of handling log file sets and/or asynchronous subscriber applications using asynchronous threads. In some embodiments, asynchronous threads wait to be notified of a buffer to write or send to a subscriber application. As shown in FIG. 13, a logger object asynchronous thread can determine if a buffer is available for sending to a subscriber application or writing (step 562). If a buffer is not available, the asynchronous thread can wait a predetermined amount of time (step 564) and can then recheck for an available buffer (step 562).

Otherwise, if a buffer is available, the asynchronous threads can send the buffer or write the buffer (step 566) and can update the buffer in order to inform the buffer of the completed send or write (step 568).

In some embodiments, a last asynchronous thread to complete a buffer send or write performs post processing (step 570). For example, a last asynchronous thread of the logger object can determine if any log files failed (step 572). If any log files failed, the last asynchronous thread of the logger object can move to a next file sequence number (step 574).

As shown in FIG. 13, after the last asynchronous thread determines whether any log files failed (step 572), the last asynchronous thread can determine if there are any waiting buffers (step 576). If there is a waiting buffer, the last asynchronous thread can pass a first waiting buffer to synchronous threads (step 578).

As shown in FIG. 13, if a last asynchronous thread did not complete (step 570) and/or after the above post-processing functions (as described above) were performed, an asynchronous thread of the logger object can determine whether the buffer send or write was successful (step 579). If the buffer send or write failed, the asynchronous thread of the logger object exits (i.e., is removed) after updating a logger objects list (step 580). Otherwise, if the buffer send or write was successful, the asynchronous thread of the logger object returns to check for available buffers (step 562).

An application 16 can be configured to subscribe to one or more logger objects associated with one or more processes. In some embodiments, an application can configure logger objects as a set. For example, a set can include, all logger objects named "transaction" on all processes in a category switch. A subscriber applicant creates a subscriber thread for each logger object. A subscriber thread (part of a logger object API) can create a subscriber application object, can obtain a reference to an appropriate logger process publisher object, and can send a subscribe request. In some embodiments, a reply to a subscribe request is only received if there is an error. A logger object can also make call-back requests to the subscriber object (a reference to which is a parameter of the subscribe request). Call-back requests can be handled by worker threads under control of inter-process communications software being used with the system 10.

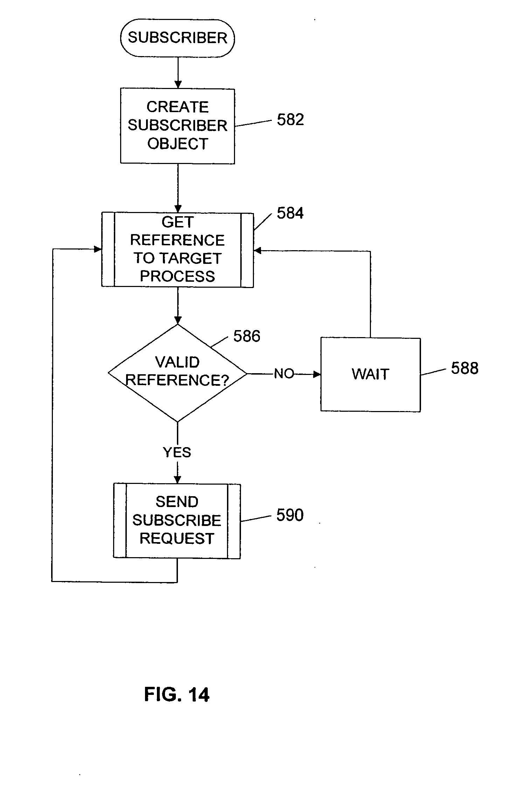

FIG. 14 illustrates a process of creating a subscribing application object implementing a subscriber interface and activating it. As shown in FIG. 14, a subscriber application thread creates a subscriber application object (step 582). Next, the subscriber application thread obtains a reference to a target process (i.e., publisher interface object of logger process) (step 584). In some embodiments, the subscriber application thread can determine whether the reference to the target process is valid (step 586). If the reference is not valid, the subscriber application thread can wait a predetermined amount of time (step 588) and can attempt to obtain a new reference to the target process (step 584).

Once the subscriber application thread obtains a valid reference to a target process, the subscriber application object sends a subscribe request to the target process (step 590). The subscribe request can indicate a logger object required and, in some embodiments, a call-back object reference. Receiving a reply to the subscribe request can indicate that the subscription has failed and should be retired (step 584).

FIG. 15 illustrates a process of handling a call-back request. As shown in FIG. 15, a communication thread can determine a type of a call-back request (step 592). In some embodiments, communication threads are implemented in subclasses of the subscriber application thread in order to handle call-back requests.

If the communication thread determines that the call-back request includes a handle-recovery request (step 594), the communication thread can recover log entries missed while the logger object was disconnected (if applicable). Otherwise, if the call-back request includes a handle-buffer request (step 596), the communication thread can process entries contained in a received buffer. In some embodiments, processing entries contained in a received buffer includes queuing the buffer or entries to be handled by background tasks. As shown in FIG. 15, the communication thread can inform the logger object that it can continue (step 598).

In some embodiments, each process in the system 10 is configured with an event logger object. The event logger object is used by the process to log events, such as communication failures, device status messages, auditing information, etc. Each call to the event logger object can specify a level such as "ERROR," "WARNING," "INFO," or "DEBUG," and the event logger object can be configured to process only events with a level greater than or equal to a predetermined level, such as "WARNING." Event logger objects, however, can be modified by configuration or control data in order to handle events with an "INFO" level and/or a "DEBUG" level. In some embodiments, an event logger object has a timer value that flushes buffers every few seconds.

The monitoring subsystem 18 can subscribe to event logger objects and, for each event received, can process rules in order to determine if any actions are required, such as which users to inform of the event.

In some embodiments, a database loader application may subscribe to the event logger object in order to capture events required for back office processing. Other applications may also subscribe directly to the event logger object. For example, an application 16 can subscribe to one or more processes in order to combine event logs from the one or more processes into a consolidated log file. Subscriber applications can also use logs written by the monitoring subsystem 18 after applying rules in order to distill event information.

In some embodiments, logger objects capture transactions (i.e., context objects including data defining a transaction) being processed by the system 10 and can safely store transactions before replying to the transaction originator. Logger objects capturing transactional data ("context object logger objects") can be configured in a business transaction originating process and can have short buffer flush timer values. In some embodiments, database loaders subscribe to context object logger objects in order to update a main transaction database as a background task. In addition, the monitoring subsystem 18 can subscribe to context object logger objects in order to maintain statistics.

As described above, a context object can include data defining a transaction (hereinafter referred to as a "transaction"). A transaction can include request information and an indication of processing needed to respond to a request. For example, a transaction for a withdrawal from an ATM can include an indication of processing needed to receive a request for money from an ATM, to route the request to a FI associated with a card provided to the ATM, to receive an authorization from the FI., to authorize the ATM to dispense the money, to record a financial transaction for further processing, and to handle any errors that occur during processing. In some embodiments, once created, transactions last or are active for a few seconds and, except for recording transaction data for further processing at a later date or for logging purposes, can exist only within the memory of the computer system handling the transaction.

A context object can include a case. In comparison to a transaction, a case can include information needed to respond to a longer-tenn service request. In some embodiments, the longer-term requests can include manual processing and/or computer processing. For example, a case can include information needed to handle a dispute when someone receives less money than requested from a possibly malfunctioning ATM. The case can require documentation of the problem from the person asking for the adjustment, documentation of the problem from an FI managing the ATM, and/or documentation of the problem from an FI that issued the card provided to the ATM. In some embodiments, cases can take days or months to reach a resolution, and can require input from any number of people, system components, and systems while being processed.

In some embodiments, transactions and cases exist over different time periods, and can have different requirements. In both situations, however, a context object contains and manages access to information for an element of work processed by the system 10 (e.g., a case or a transaction).

If the system 10 encounters a problem while processing a transaction, the system 10 can generate a context object that includes a problem case. In some embodiments, the system 10 uses a problem management subsystem to generate a problem case. The context object including the problem case can be related to the context object including the transaction or the case that caused or generated the problem. The processing needed to complete the transaction or the case, therefore, can involve more than one context object.

As described above, some context objects exist in the system 10 for only a second or two, while other context objects can exist or are active in the system 10 for days or months. In some embodiments, context objects can be saved to log files or other disk storage at some point. Context objects can also be saved in persistent storage, such as disks. In some embodiments, storage mechanisms used to store context objects can use standard relational database management system ("RDBMS") technology to store the context objects in order to provide efficient searching and reporting. Individual context objects, however, can be reconstructed in an original context object form when opened or activated.

As shown in FIG. 16, in order to process context objects, system components (e.g., the applications 16, the configuration subsystem 14, and the monitoring subsystem 18) can include one or more processing modules 660. Each processing module 660 can include a container 662. A container 662 can include a rules engine 664 that executes rules objects 666. The processing module 660 can also include foundation components 667. The foundation components 667 can include logic or application for initializing and executing the processing module 660. The foundation components 667 can include listeners or event handlers that intercept incoming data to a process device or system (i.e., the environment 19). In some embodiments, the foundation components 667 can include one or more communication facilities or interfaces that allow the processing module 660 to communicate or interact with other process modules 660, other system components, and/or other systems. For example, the foundation components 667 can include a common object request broker architecture ("CORBA") interface.

In some embodiments, the system 10 can include multiple processing modules 660 configured to execute rule objects 666 related to particular functions. For example, separate containers 662 or rules engines 664 can execute terminal management rule objects, transaction routing rule objects, transaction authorization rule objects, logging rule objects, and monitoring rule objects. In some embodiments, each container 662, regardless of the specific type or scope of the rule objects 666 it executes, can be configured to execute rules objects 666 using context objects as input. Each container 662 of the system 10, therefore, can have a similar structure, and the structure can be independent of the types of rule objects 666 that a container 662 executes.

In some embodiments, the processing module 660 performs a startup procedure. During a startup procedure, the processing module 660 can load a configuration extract, and, once configured with the configuration extract, the processing module 660 can wait for incoming messages. When an incoming message arrives, the processing module 660 creates a new context object (or uses a context object included in the incoming message) and passes the context object to the rules engine 664 for processing.

As shown in FIG. 17, the rules engine 664 executes rule objects 666 in a loop. In some embodiments, the rules engine 664 starts by generating a first rule object 666 to execute based on data included in the context object. Once the rules engine 664 generates the first rule object 666, the rules engine 664 passes the context object as input to the first rule object 666, and the first rule object executes and performs the business functions or logic. The rule objects 666 executed with the rules engine 664 include the application logic, and, therefore, the act of executing a rule object 666 causes the system 10 to execute logic contained within the rule object 666.

In some embodiments, while executing a rule object 666, a rule object 666 can wait for additional incoming data. Incoming data can include data from an external source or from another context object included in another part of the system 10. For external incoming data, rule objects 666 can create a context object including the incoming data. For internal incoming requests, the incoming data can already include a context object.

Each context object can include a rule identifier. The rule identifier can indicate a rule to execute. The rules engine 664 instantiates or generates a rule object 666 corresponding to the indicated rule and executes the rule object 666. Each executed rule object 666 modifies the rule identifier to indicate a next rule to execute. After a rule object 666 finishes executing, the context object is returned to the rules engine 664, which can generate another rule object 666 based on the modified rule identifier included in the returned context object. The rules engine 664 continues generating rule objects 666 until processing is complete. Processing can include passing a context object to other rule objects 666, other processing modules 660, or other components of the system 10 on the same computer as the rule object 666 or on another computer. In some embodiments, a rule object 666 can pass a context object to any component of the system 10 that can accept and process context objects.

To finish processing a context object, a rule object 666 can set the rule identifier of a context object to a predetermined termination value, such as "null." In some embodiments, when the rules engine 664 encounters a rule identifier set to a termination value, the rules engine 664 and/or the container 662 can return the context object to a caller (i.e., the system component or outside component that initially sent the incoming message). The rules engine 664 and/or the container 662 can also perform one or more post-processing functions, such as logging processing information. The processing module 660 can then wait for another incoming message.

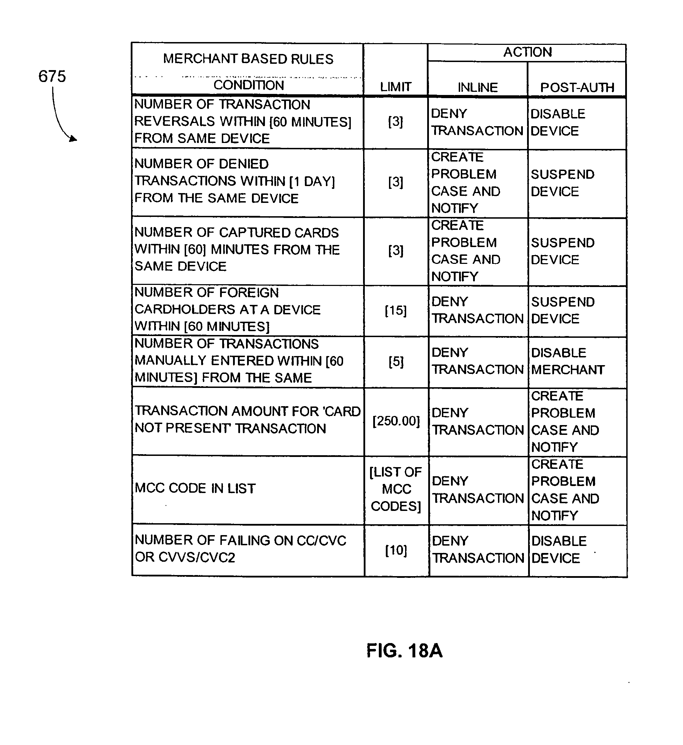

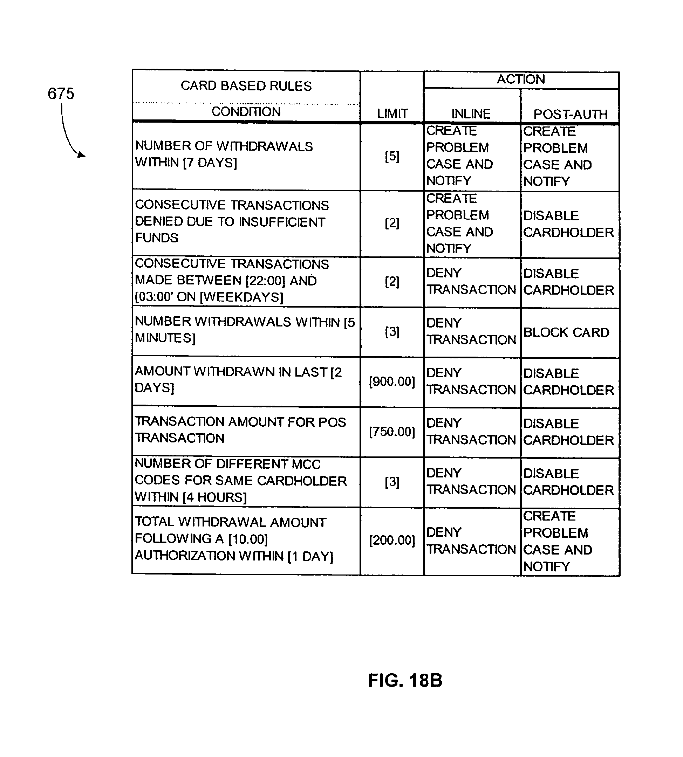

Each rule can include one or more constraints or limits. Once instantiated as a rule object 666, the constraints or limits of the rule can be applied to data included in a context object or other requested data. Depending on the results of testing the constraint or limit, a rule object 666 can perform one or more actions. In some embodiments, the actions performed by a rule object 666 can include modifying data included in a context object. The actions can also include generating another context object (e.g., a context object including a case) or requesting additional data from another system, rule object, or context object. FIGS. 18a and 18b illustrate rules 675 according to one embodiment of the invention.

In some embodiments, network or switch managers can change constraints or limit values and/or actions defined in a particular rule without changing foundation code of the system 10. Over time, a set of rules can evolve into a network of interconnections where each rule knows what it is to do, but does not necessarily know how the system 10 got to its current condition.

Rule objects 666 can read and update data included in a context object in order to test a constraint or limit. For example, if one rule object ("Rule B") needs to know how a previous rule object ("Rule A") made a decision, Rule A can record decision information in the context object passed to Rule B. Rule B can then interrogate the decision information without having to duplicate any logic performed by Rule A. In this way, rules objects 666 can communicate indirectly. In some embodiments, context objects are the only source of information provided from one rule object 666 to another rule object 666.

Rule objects 666 can also retrieve information from the configuration subsystem 14. For example, many values that exception management rule objects use in their constraints can be stored in the configuration database 20. In addition, rule objects 666 can request information from components of the system 10. For example, a rule object 666 can request current threshold settings for various types of event processing from the monitoring subsystem 18.

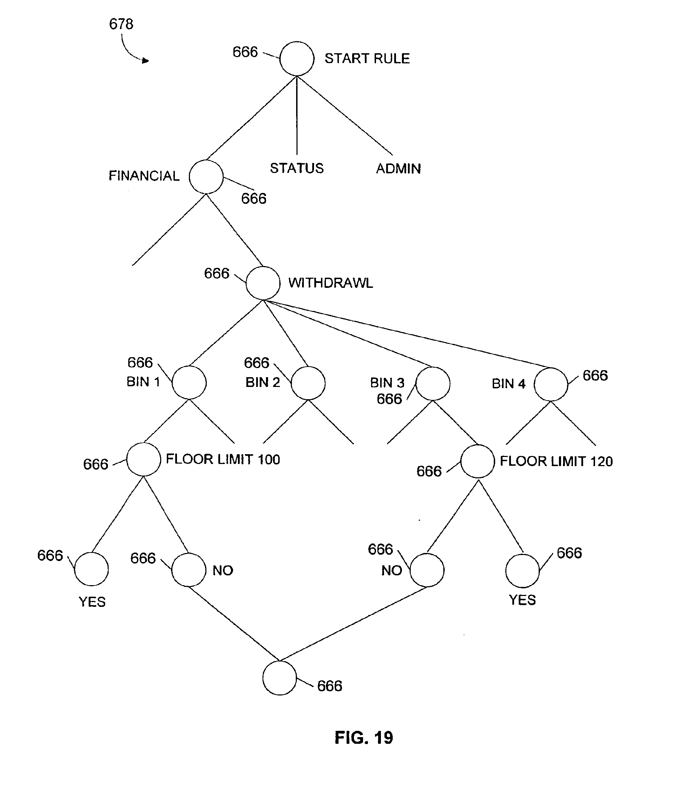

After performing actions, a rule object 666 indicates what rule, if any, the rules engine 664 should execute next. As described above, a rule object 666 can set a rule identifier included in a context object to an identifier of a next rule to execute, and the rules engine 664 can generate a rule object 666 corresponding to the indicated rule. As shown in FIG. 19, the rules engine 664 executes a first or start rule object 666 and continues to execute rule objects 666 (shown as circles in FIG. 19) as long a rule object 666 currently being executed indicates a next rule object 666 to process (next rule object 666 shown linked to a previous rule object 666 by a connecting line in FIG. 19). Similar to standard applications that execute subroutines or sub-functions, rule objects 666 can also generate their own instances of a rules engine 664 to activate nested rule loops.

If a currently executing rule object 666 does not indicate a next rule to process, the rules engine 664 has completed the requested processing, and the processing module 660 can return the processed context object to a calling application or system component that sent the incoming message that initiated the processing. In some embodiments, the context object is returned to a rule object 666. The rule object 666 receiving the returned, processed context object can be part of another rules engine 664 included in the same container 662 as the rules engine 664 that processed the context object. The rule object 666 receiving the returned, processed context object can also be part of another rules engine 664 included in another processing module 660. A processing module 660 can also generate another rules engine 664 to perform additional processing after a rules engine 664 processes a context object. The processing module 660 can also pass the context object to another processing module 660, container 662, application 16, or system component included in the system 10 or included in an external system.

As shown in FIG. 19, the processing performed on a context object can be represented as a chain or network of rule objects 670. The network of rule objects 670 can differ from one context object to another. As described above, a rule object 666 can also invoke nested processing by executing its own instance of a rules engine 664. In some embodiments, there is no limit to the maximum number of rule processing levels executing in the system 10 at any given time.

In some embodiments, the processing defined with a set of rule objects 666 can happen consecutively without interruption. The system 10 can also save a context object and can resume processing of the context object at a later date or time. In some embodiments, the system 10 can save context objects that are waiting on incoming data. The system 10 can also execute rule objects 666 to look through saved context objects to identify context objects that need attention and/or that are ready to resume processing. In some embodiments, rule objects 666 can include timeout conditions that can be compared against data included in stored context objects in order to determine whether a saved context object has timed-out or expired.

FIG. 20 illustrates a chain or network of rule object 671 used to route a context object or transaction 672 according to one embodiment of the invention. In some embodiments, the network of rule objects 671 can include multiple types of routing rules. For example, the network of rule objects 671 can include identify route rule objects 674, destination routing rule objects 676, direct routing type rule objects 678, card routing rule objects 680, and reject transaction rule objects 682. Identify route type rule objects 674 can look at the data included in the context object 672 and determine if the context object 672 should be routed using destination routing, direct routing, or card routing. Depending on the data included in the context object 672, identify route type rule objects 674 can pass control to an appropriate routing rule object. Identify route type rule objects 674 can also store an error message or an error identifier in the context object 672 and pass control of the context object 672 to a reject transaction rule object 682 if an error occurs while processing the context object 672.

Destination routing rule objects 676 can identify a destination routing identifier, can find an appropriate routing record, can verify that a personal access or account number ("PAN") has a proper length, and can update the context object 672 with a route to use. Destination routing rule objects 676 can also indicate that additional rule objects 666 are not required to route the context object (i.e., by setting the rule identifier of the context object 672 to "null"). Destination routing rule objects 676 can also store an error message or an error identifier in the context object 672 and pass control of the context object 672 to a reject transaction rule object 682 if errors exist in the context object 672.

Direct routing rule objects 678 can identify a direct routing identifier, can find an appropriate routing record, can verify that a PAN has a proper length, and can update the context object with a route to use. Direct routing rule objects 678 can also indicate that additional rule objects 666 are not required to route the context object 672. In some embodiments, direct routing rule objects 678 can also add an error message or an error identifier to the context object 672 and can pass control of the context object 672 to a reject transaction rule object 682 if an error exists in the context object 672.

Card routing rule objects 680 can find a card base record, can match network logos to a routing record, can check interchange values, and can check currency. Card routing rule objects 680 can also update the context object 672 with a route to use and an indication that additional rules are not required (i.e., processing is complete). In addition, card routing rule objects 680 can store an error message or an error identifier in the context object 672 and pass control of the context object 672 to a reject transaction rule object 682.

Reject transaction rule objects 682 can log an error based on an error message or error identifier stored in the context object 672. Reject transaction rule objects 682 can also mark the context object 672 as rejected, and can indicate that additional rules are not required (i.e., processing is complete) since an error occurred while processing the context object 672.

As shown in FIG. 20, the system 10 can pass the context object 672 (or a reference to the context object 672) representing a current transaction to the rules engine 664. The context object 672 can include a rule identifier 683 that indicates a rule to execute or apply. The rules engine 664 generates a rule object 666 corresponding to the value of the rule identifier 683 (an identify route type rule object 674 in the current example) and passes the context object 672 (or a reference thereto) to the generated identify route type rule object 674. Using the data included in the context object 672, the identity route type rule object 674 determines a next routing rule object to apply and sets the rule identifier 683 of the context object 672 to an identifier of the next routing rule. The identity route type rule object 674 can also store a "no route" error identifier in the context object 672 and set the rule identifier 683 of the context object 672 to an identifier of a reject transaction rule 682. After the identity route type rule object 674 execute, the rule object 674 returns control to the rules engine 664.

As shown in FIG. 20, the rules engine 664 continues to generate and execute a rule object 666 as identified by the rule identifier 683 after each rule object 666 completes execution. Each rule object 666 can modify, add, and/or delete information stored in the context object 672. For example, the destination routing rule objects 676, the card routing rule objects 678, and the card routing rule objects 680 can add routing information to the context object 672, and other rule objects 666 that receive the context object 678 can use the routing information to route the context object 672 accordingly. Each rule object 666 can also place a termination value, such as an empty or "null" value, into the rule identifier 683 of the context object. Setting the rule identifier value to a termination value can indicate that processing is complete.

If a rule object 666 encounters an error, a rule object 666 can add an appropriate error message or error identifier to the context object 672 and can set the rule identifier 683 to an identifier of a reject rule object, such as a reject transaction rule object 682. The reject rule object can handle error conditions identified in the context object 672. In some embodiments, after handling any errors, a reject rule object can set the rule identifier 683 to a termination value in order to end the current processing.

In some embodiments, when the context object 672 is returned to the rules engine 664 with the rule identifier 683 set to a termination value, the rules engine 664 terminates. After the rules engine 664 terminates, the context object 672 is returned to the caller or instantiator of the routing routine. In some embodiments, the caller can include another rule object 666. For example, a rule object 666 (i.e., an obtain transaction routing rule object) can initialize and execute a rules engine 664 and the rules engine 664 can execute one or more rule objects 666 in order to obtain routing information.

In some embodiments, rule objects 666 include data stored in the configuration database 20. As shown in FIG. 21, a rule object 666 can be generated (or include specific configuration data) based on data included in a context object. For example, as shown in FIG. 21, a first context object 690a can include data identifying a transaction associated with a first credit card company network, and the rules engine 664 can generate a first rule object 692a based on a rule definition or class 695 that includes values and conditions for checking a floor limit amount for transactions associated with the first credit card company. Similarly, if a second context object 690b specifies a second credit card company network different from the first credit card company network, the rules engine 664 can generate a second rule object 692b based on the same rule definition or class 695 that includes values and conditions for checking a floor limit amount for a transaction associated with the second credit card company. Therefore, to change the logic of the system 10 (e.g., add rules for a particular credit card company), system developers and system users can change the configuration data using the configuration subsystem 14 as described above. Using the configuration data, system developers and system users can also indirectly add new rules by adding configuration data for new types of rules that already exist in the system 10. For example, as described above, the system 10 includes a base "CheckFloorLimit" rule definition or class 695 and includes related configuration data for processing transactions associated with the first credit card company and the second credit card company. The system 10 can apply the configuration data to the base rule class 695 in order to generate a rule object 692a for transactions related to the first credit card company and a rule object 692b for transactions related to the second credit card company. To modify the system 10 to handle transactions from a third credit card company identified by a third context object 690c, system developers or system users can add configuration data for the third type of credit card company to the configuration database 20 using the configuration subsystem 14. The rules engine 664 can then apply the new configuration data related to the third credit card company to the base rule class 695 and generate a third rule object 692c to process the third context object 690c. Using the configuration data, rules objects 666 are customized based on the data included in the context object being processed.

In addition to using rule objects 666 to process a transaction, the system 10 can use rule objects 666 to provide workflow assistance to help lead a system user through steps needed to perform a job. Workflow assistance can include providing work queues to help system users gather, prioritize, and manage work to be done. Work queue management can also allow authorized users to create and modify queues and to move work between queues. Work queue operators can process work requests on queues associated with an individual operator or by operator skill set. Workflow assistance can also include filtering operator options in order to display only valid actions for the current work request. For example, the interface used to select the next step and reason code for an exception management system ("EMS") case can show steps and codes that are valid for the current case being processed. The valid steps and codes can change from one work request to another work request.

Using the above workflow assistance and work request rules, the system 10 can automatically check aging conditions of work requests. For example, the system can bring a specific unit of work to an operator's attention if a processing period is about to expire or has expired without the proper processing having been performed.

In some embodiments, workflow features use an identifying object, often called a "case," a "ticket", or a "job," to manage work requests. When a problem occurs, the system can create a ticket and can create a context object to hold the data associated with that ticket, including what happened and when. As described above, the system 10 can place an identifier of a first workflow rule to process, for example a "handle new problem" rule in this case, into the context object and can pass the work request, encapsulated as a context object, (or a reference thereto) to a rules engine. The rules engine can generate a rule object corresponding to the identified rule and can execute the rule object to process the context object. The rule objects can notify specific individuals about a problem, can attempt to solve a problem automatically, and/or can add information about a ticket to a work queue for a specific type of operator. If a rule object does not delete the ticket, the system 10 can store the context object in a database for additional use in the future. While in some embodiments context objects including data defining transactions reside within the system memory for only a few seconds, context objects defining problems (and related rule objects) can be saved in a database file for days, weeks, or months as an active process.

If an operator works on a problem, the system 10 can update a ticket and any related stored data in order to indicate that work was performed. For instance, a user can add a comment to a ticket indicating that a service person has been called. Workflow rules can present the user with actions that are appropriate for a particular ticket at a particular time. Workflow rules can also validate that the actions performed by the system user were performed correctly.

The system 10 can keep track of pending tickets based on timeout values stored in context objects. The system 10 can set timers to expire if no action is taken by each timeout. When such a timer expires, the system can create a new context object with the original ticket data and can pass the new context object to a rules engine. In some embodiments, the new context object includes an identifier an initial rule different from the initial rule identified in the first, timed-out context object. For example, the new context object can include an identifier of an "initial timeout expiration" rule. The rule can attempt to escalate the problem, can notify additional people, and can place information about the escalation to a work queue of a problem supervisor.

The system 10 can continue to track a ticket through any number of stages (usually called "states") with different deadlines depending on the severity and age of the problem as defined by current workflow rules. In some embodiments, actions performed by a rule object or a system user can remove or modify an active status of a ticket.

At any given time, any number of tickets (including none) can be active in the system 10. In some embodiments, problem tickets can remain active for only a short time, and transaction exception cases can remain active for months. As long as the information about a case or a ticket remains in an active database file, the workflow systems can continue to manage them as defined by the workflow rules.

As described above, the system 10 can use rule objects 666 to process transactions flowing through the system 10 and/or workflow requests surrounding the processing of short term or long term manual efforts. In some embodiments, rule objects 666 can also be used for tracing system activities. For example, system activities can change between development, problem identification, and normal productive use, and can be controlled system-wide through a set of tracing rules. System throughput can also vary as a changing volume of work is routed around equipment that is malfunctioning or heavily loaded. The process used to route work within a single system component or between system components, can also be controlled by rules. The EMS can also use rules to ensure that the system 10 and system users follow rules published in a network's exception management procedure notebooks. In some embodiments, the EMS can use a different rule set for individual networks. Procedures can also change frequently, and rules can be updated frequently to keep up with the changes. Furthermore, cases created while previous rules were in effect must still use those previous rules, and the EMS can use multiple rule sets for each network with multiple effective dates (described below) so it can process each case correctly.

In some embodiments, system rules (e.g., transaction processing rules, workflow management rules, etc.) can be managed by a rules management subsystem or environment. Using the rules management subsystem, system developers and system users can establish rule sets. Separating rules into individual rule sets can make them easier to modify and control. Rules can differ by network, transaction type, or any number of different groupings. In some embodiments, process-specific rules allow system users to install a set of rules at a specific location, possibly on a single system component, while continuing to use existing rules at other components of the system 10. This can allow a limited execution of rules to be applied in a productive environment for final real-world validation prior to a full production installation.

A rules management subsystem can also provide rule status values (e.g., draft, stage, productive, and previous) that allows developers to create and test rules, roll rules into production, and roll rules back out of production as needed.

System developers and system users can use the rules management subsystem to set one or more effective dates for a rule. One effective date can control when a rule becomes effective and another effective date can control when a rule becomes obsolete (ceases to be effective) within the system 10. In some embodiments, effective dates can allow system users to roll-in rules before the system 10 can use them so operations can use low volume times to perform the roll-in process. In some embodiments, multiple rules can exist to perform similar functionality and each rule can have a different effective date that sets the lifetime of the rule. In some embodiments, the system 10 can choose an "active" rule to execute based on a date included in a context object being processed.

The rules management subsystem can also allow system developers and system users to establish override rules. A set of override rules can take precedence and can be processed or executed instead of another set of rules. Override rules can be used to add, modify, or eliminate features of an underlying or base rule set. Since override rules are established and stored as separate rules (rather than actually modifying the base rule set), system developers and system users can change the functionality of the system 10 without actually changing the base functionality of the system 10. In some embodiments, by establishing separate override rules, system updates only change the base functionality of the system 10 and system users do not have to retrofit their customizations back into the updated system 10 since the previously-established override rules still override the updated base rules.

As shown in FIG. 22, system developers and system users can use the configuration subsystem 14 and the rules management subsystem described above to generate and run customized versions of system components (e.g., applications 16) by manipulating the rules and the related configuration data.

As shown in FIG. 22, the configuration subsystem 14 can be included in a system core foundation 700. The system core foundation 700 can provide system management, including startup, shutdown, and process restarting and security, which can include user authentication and authorization as well as component and communication security within the system 10. As described above, the system core foundation 700 can also provide the rules-based architecture used to control transaction processing, problem management, configuration, workflow assistance to users, etc. In addition, the system core foundation 700 can provide monitoring, configuration management, workflow management, reporting, logging, tracing, and auditing.

In some embodiments, the system 10 can include subsystems that interact with each other and with the system core foundation 700 to perform the functionality of the system 10. Subsystems built upon the system core foundation 700 can share similar technologies and architecture as the system core foundation 700, and, in some embodiments, depend upon the system core foundation 700 to provide foundation features, such as those listed above.

In some embodiments, the system core foundation 700, which establishes the structure of applications 16 and system components included in the system 10, isolates application logic from the underlying operating system and computer hardware. In some embodiments, the system architecture can run on a variety of computer hardware and operating systems. The architecture can include a runtime environment 702 that interacts directly with an operating system 704 and computer hardware 706 to get the system 10 started and to restart processes that may fail. In some embodiments, the architecture supports core components of the system 10 (e.g., the monitoring subsystem 18 and the configuration subsystem 14) for a broad range of applications. The architecture can also support utilities 710 and libraries 712 of routines (e.g., configuration extract utilities 46 and additional time and date rules useable throughout the system 10) that support the core and application-unique components. In addition, the architecture can include application-unique components that provide specific application logic (e.g., a transaction routing subsystem).

The architecture can simplify the creation of new applications upon existing, well-tested foundation features, and can implement applications on a broad variety of computer systems. In some embodiments, the system core foundation 700 can provide a mechanism to support the system 10 using various types of computer hardware. As shown in FIG. 23, since the system core foundation 700 supports various types of computer hardware, the system 10 can be run on a heterogeneous combination of computers and computer systems 750. In some embodiments, the system 10 can also work with a broad range of operating environments. To support multiple computer types and operating systems, the system 10 can execute on commonly used open system environments, such as IBM z-series computers running Linux, IBM p-series computers running AlX/Linux, HP Non-Stop computer running OSS, HP Integrity computers running Linux/HP-UX, Sun computers running Solaris, and Intel server computers running Windows Server 68003.

To enhance portability between different types of computers, the system core foundation 700, the applications 16, the configuration subsystem 14, and/or the monitoring subsystem 18 can be written in a common or standard transportable language. For example, the system core foundation 700 and the applications 16 can be written in Java and/or C++. The system 10 can also use industry standard protocols, data formats and facilities such as Java, C++, JavaScript, Java 2 Enterprise Edition ("J2EE"), extensible markup language ("XML"), hypertext transfer protocol ("HTTP"), web services, Java Management Extensions ("JMX"), Java Database Connectivity ("JDBC"), etc., in order to further increase portability.

As shown in FIG. 24, the architecture of the system 10 can include multiple subsystems 755 that interact and communicate using a common communication facility 757. In some embodiments, the system 10 can run as many instances of each subsystem 755 as needed. The system 10 can also run one or more instances of a subsystem 755 on any computer or computer system (i.e., a node) included in the system 10. As described above with respect to FIG. 22, the system core foundation 700 and the runtime environment 702 can provide a common framework for establishing multiple applications 16.

In some embodiments, the common communication facility 757 is based on Java's standard communication components, such as CORBA. The communication facility 757 can allow subsystems 755 to communicate and pass context objects. In some embodiments, the common communication facility 757 includes a set of standard interfaces that allows the subsystems 755 to communicate with each other regardless of the inner structure, language, or other details of the internal subsystems or application components. In some embodiments, each subsystem 755 is considered a strong independent unit, which is loosely coupled to the rest of the system 10 through the common communication facility 757.

To facilitate communication, each subsystem 755 shown in FIG. 24, including the system foundation core 700, is wrapped in a common communication interface using the communication facility 757 in order to standardize communication between the subsystems 705. As also shown in FIG. 24, the subsystems 755 can communicate with customer touch points 760 and routing ending points 770 that are external to the system 10, such as ATMs and financial institution networks.

In some embodiments, the system 10 can include specialized third party hardware and software products, such as hardware security modules ("HSMs") and database management systems ("DBMSs"). The system 10 can wrap third party products in an abstraction layer that isolates the rest of the system 10 from third party products. Using abstraction layers can allow third party products to change without requiring additional changes through the rest of the system 10. For example, a database abstraction layer can support several commercial relational DBMS products, and can handle the conversions between the relational structure of the underlying DBMS and the object-oriented structure of the system 10.

As shown in FIGS. 23 and 24, the system 10 can include multiple subsystems 755. Furthermore, the system 10 can include multiple hardware components, and, in some embodiments, can interact with external systems. In some embodiments, in order to provide a single system view to system users such that a system user is unaware of the environment and/or structure of the system 10, the system 10 can use standard simple network managing protocols ("SNMPs") to monitor and control the multiple subsystem and hardware components it includes as well as external systems added to or interacting with the system 10. For example, the system 10 can be combined with legacy or existing electronic funds transfer systems and both systems can be monitored and controlled seamlessly without a system user knowing which systems are included or interacting with the system 10 and/or which particular systems are processing work requests and/or transactions. The single system view can ease the migration from existing systems by allowing users to run both new and existing components as if they were a single system while individual components migrate from older systems to the current system 10.

In some embodiments, as described above, the system 10 provides an object-oriented configuration subsystem capable of providing separate interfaces to users filling different roles for the objects they work with. For example, business users can fill in the business values for a new ATM object managed by the system 10, while technical users fill in separate technical values for the same device object. To accomplish this, the configuration subsystem 14 can allow system users to define data element responsibility by a system user type.

When a system user modifies configuration data, the system 10 can provide the ability to introduce configuration changes non-disruptively, the ability to audit and report on all changes, and the ability to back out configuration changes to the previous run state if a run-time problem occurs. The system 10 can also "stage" configuration data updates within the system 10 so that updates can be made effective automatically at a specific date and time without any manual intervention. The system 10 can also update one computer in a multi-node system with a configuration update for production verification before updating all nodes in the system. Some configuration changes made by system users need to be immediate (e.g., the real-time addition of a point-of-sale ("POS") device), and, therefore, are done non-disruptively.

Workflow features can also allow system users to add change requests to the system in order to add, change, or delete configuration data and to track the execution of work for each appropriate role (e.g. technical and business data management). For example, the system 10 can provide forms for technical specialists to define the technical description of items, such as external terminals, different than forms for business specialists to define the business descriptions of the same terminals. Late or missing completion of such work can be detected and escalated for configuration managers as needed.

In some embodiments, the configuration subsystem 14 is itself configurable. The configuration subsystem 14 can execute a set of rule objects as described above to provide and manage configuration data. System users can configure the configuration subsystem 14 by controlling the rules and configuration data as described above.

In some embodiments, the system 10 provides browser-based user interfaces so that system users with an acceptable web browser, such as a standard extensible markup language ("XML") enabled web browser, can access features of the system 10, which are allowed by the system user's security profiles, from any location that provides connectivity to the system 10. The system 10 can also include some non-browser interfaces for performance reasons. The system 10 can allow system users to distribute functions that are often performed at a central site to system users and remote users through the browser-based interfaces. For example, a switch manager can delegate user security administration to the local level by defining local security managers. Client organizations can also manage their own configuration data through a browser-based user interface.

Browsers, such as Microsoft's Internet Explorer and Mozilla's Firefox, provide the ability to manage extensible markup language ("XML") documents and manipulate XML data within an XML document object model ("DOM"). Information expressed using XML is called a "XML Document," and is organized into a hierarchy of objects called a XML DOM. Software tools exits that allow information to be added to an existing XML DOM, extract information from an existing XML DOM, and manipulate data stored within an XML DOM.

Browsers also process JavaScript instructions. JavaScript is a programming language run on a browser to manipulate an XML DOM and/or to modify an HTML document as a user works with the browser.

Browsers also process extensible stylesheet language transformations ("XSLT") directly on the browser as built-in features. XSLT facilities transform information from one format (or language syntax) to another format. For example, XSLT facilities can combine data stored as XML with a HTML page or form or an extensible HTML ("XHTML") page or form in order to provide a page or form to display the data. XSLT facilities produce HTML fragment which is spliced into an HTML page or form for display.

FIG. 25 illustrates functionality of a browser-based user interface 765 of the system 10 according to one embodiment of the invention. The browser-based user interface 765 provided to system users (e.g., for providing and updating configuration data) displays one or more "forms" or pages 766 of information. In some embodiments, the browser-based user interface 765 displays XML forms. The browser-based user interface 765 can format forms 766 with an associated style sheet 767, such as a XSLT, that reformats forms 766 into a browser-displayable language, such as hypertext markup language ("HTML"). In some embodiments, the browser-based user interface 765 uses supporting data such as language dependent text, configuration dependent option lists, etc. to format forms. The browser-based user interface 765 can hold forms in a form repository 768, such as an XML DOM. Only data not held in the form repository 768 (or defined as dynamic) is requested from a server or browser cache that provides the forms. The browser-based user interface 765 maintains configuration data in a single form repository 768, which is loaded with the browser-based user interface 765 the first time it is needed. The form repository 768 includes multiple browser forms.

For example, the browser-based user interface 765 requests XML data (from the server 769) it needs to display each form 766 and stores the XML data in the XML DOM 768. Once the form 766 is loaded with the browser-based user interface 765, the browser-based user interface 765 uses the appropriate XML form 766 definition included in the XML DOM 768, and the XML data (received from the server 769), and the XSLT 767 associated with the form 766 to create a form 766 to be displayed with the browser to a system user.

Once data entered into a form 766 has been validated using a first data validation level, as described above, the browser-based user interface 765 sends a request, containing data entered by a system user, to the server 769. In some embodiments, the request is sent as a single "document," such as an XML document rather than the standard individual data elements normally used to return separate data elements. The server 769 generates a reply, and the browser-based user interface 765 processes the reply in order to display a next form 766.

In some embodiments, the browser-based user interface 765 includes XML and/or XSLT representations of common HTML display controls, such as lists and grids. The browser-based user interface 765 can provide the ability to process data within the representations of controls through the use of JavaScript. Using the display controls, a system user can scroll through data, resort data, and reorganize data directly on the browser without requesting additional data or processing from a web server. The XML and/or XSLT representation of common HTML display controls and dynamic HTML ("DHTML") facilities stored in a single XML DOM 768 can provide a fast and rich browser-based user interface 765 to a system user. DHTML facilities can provide HTML manipulation with JavaScript to provide an active and programmable browser-based user interface 765.

When displaying a form 766, the browser-based user interface 765 can respond to events according to configuration rules in order to produce popup menus, new forms, drag and drop functionality, service requests, and other actions.

As described above, the browser-based user interface 765 uses XML to store multiple forms 766 within a browser XML DOM 768 and populates the forms with data from a server 769 without having to retransmit formatting and display information each time the browser displays a form 766. In some embodiments, the browser-based user interface 765 provides common XML-based display controls within the forms in the XML DOM 768 that use XML and DHTML in an XML DOM-based environment. In summary, the browser-based user interface 765 only needs to exchange data with the server 769 and handles data display requirements directly once the XML DOM 768 is loaded in the browser with the required form 766 definitions.

In some embodiments, user interfaces displayed with the system 10 are internationalized to include the use of local languages, icons, and colors. User interfaces can also support both left-to-right and right-to-left languages with double-byte character sets capable of displaying Asian, Arabic, Hebrew, and other non-Latin languages. In addition to providing standard browser interfaces, the system browser-based interfaces can also be capable of handling drag and drop element manipulation, interactive graphs and charts, and true graphical displays.

As described above, system users can also define many details of the configuration subsystem 14, including the user interfaces, by manipulating metadata that describes the contents of each page without having to develop and install new page layouts.

In some embodiments, the system 10 is designed to run on one or more clusters of various types of computers, including heterogeneous clusters made up of different types of computers running different operating systems. Each individual computer is called a "node." Multiple clusters can run simultaneously at multiple locations in order to provide mutual backup options for a single system. As shown in FIG. 26, nodes 800 within a cluster 810 can communicate through multiple independent networks 820, such as local area networks ("LANs"), so that the failure of one network does not disrupt the operation of the cluster 810.

In some embodiments, the entire system 10 is configured on each node 800 in a cluster 810. Some embodiments of the system 10 can also dedicate specific system functions to specific nodes 800 included in a cluster 810. Executing the system 10 on a cluster 810 of several interconnected nodes 800 can allow the system 10 to accomplish several critical performance and reliability requirements. For example, utilizing multiple nodes 800 can provide load-balancing routines that can improve overall performance by routing incoming traffic to the least busy node 800. System users can also temporarily expand a system's capacity to handle peak loads by configuring new nodes 800, normally used for other purposes, to be part of the system 10. Likewise, system users can remove nodes from or add nodes to a running system 10 without interrupting the running application 16 in order to perform upgrades or to reconfigure the system 10 for changing requirements. In some embodiments, a cluster 810 can automatically route all incoming traffic away from a failing (or failed) node 800 allowing the system 10 to continue processing while the failed node 800 is repaired and/or replaced. In addition, the use of multiple nodes 800 allows the system 10 to perform continuously at a high level of performance regardless of needs to handle hardware failures, system upgrades, and software updates.

An alternate strategy to a multi-nodal structure is to use a single node with fault-tolerant computer systems, such as the HP Non-Stop or Stratus ftServer computers, that provide internal redundant components and software recovery facilities to provide the reliability and continuous availability that the system 10 is designed to utilize.

As illustrated and described above with respect to FIG. 27, each node 800 can execute a number of processes. In some embodiments, each subsystem can include a virtual machine, such as a Java Virtual Machine ("JVM"), to execute multiple processes. A virtual machine can appear as a single process to a node's operating system, but can run various processes simultaneously. Individual processes that could become a single point of failure for a node 800 can be duplicated on that node 800 to ensure throughput.

A "node agent" 850 is a process executed by a node 800 that listens for input from within or from outside the node 800. The node agent 850 can start processes within the node 800. In some embodiments, an operating system of a node 800 starts one or more node agents 850 as standard processes when the node 800 is started or booted up. The node agents 850 can remain running as long as the node 800 remains running. Node agents 850 for a single node can be "separated" as much as possible to ensure availability of a node 800. For example, node agents 850 can be connected to separate network segments and/or can be running on different processing units. Once started, an operating system of a node 800 monitors each node agent 850, and restarts a node agent 850 if it fails. In some embodiments, using two node agents 850 ensures that at least one node agent 850 is available when needed. Since node agents 850 can be started when a node 800 is started, node agents 850 can allow a cluster 810 of nodes 800 to automatically start required system processes on a new node 800 that joins the cluster 810 when the cluster 810 is initially started or after the cluster 810 has started.

In some embodiments, in order to communicate with other nodes 800, an operating system of a node 800 starts a communication facility as a standard process when the node 800 is started. The communication facility remains running as long as the node 800 remains running. Once started, the operating system monitors the communication facility and restarts the communication facility if it fails.

As shown in FIG. 27, an operating system of a node 800 starts a first virtual machine ("VM #1") 870 as a standard process when the node 800 is started. The first virtual machine 870 remains running as long as the node 800 remains running and can be configured to start a first process monitor ("PM #1") 880, which is responsible for reading the configuration data for a node 800 and for starting additional processes on a node 800.

The first process monitor starts a second virtual machine ("VM #2") 890, which starts a second process monitor ("PM #2") 900. The first virtual machine 870 uses the first process monitor 880 to monitor the second virtual machine 870, and the second virtual machine 900 uses the second process monitor 900 to monitor the first virtual machine. In this way, the first virtual machine 870 and the second virtual machine 890 ensure that at least one virtual machine is available when needed and can be present to start the other virtual machine if it fails.

To monitor each virtual machine and process monitor, the first process monitor 880 and the second process monitor 900 can start a "functioning" process 910 and 920 within the first virtual machine 870 and the second virtual machine 890 respectively, in order to indicate to the system 10 that a process monitor and a virtual machine is functioning. The first process monitor 880 watches the functioning process 920 started in the second virtual machine 890, and the second process monitor 900 watches the functioning process 910 started in the first virtual machine 870 in order to make sure a virtual machine is available to start processes. In some embodiments, the first process monitor 880 and/or the second process monitor 900 also monitor statuses of other virtual machines on other nodes 800.

The first process monitor 880 and/or the second process monitor 900 can use configuration data for their node 800 to start additional processes on a node 800. In some embodiments, the first process monitor 880 and/or the second process monitor 900 are also configured to start additional processes on other nodes 800.

The first process monitor 880 and/or the second process monitor 900 can load a licensing subsystem. Each additional subsystem or process started with one of the process monitors 880 and 900 checks the validity of its own configuration data, and verifies with the licensing subsystem that authorization exists to run a subsystem or process. Any subsystem or process requiring configuration data or rules that are not licensed can be restricted from being started.

To prevent unauthorized modification and/or execution of software of the system 10, the software executed by the system 10 can be provided in a secure format. In some embodiments, the software can be digitally signed to prevent the software from being tampered with. For example, the software included in the system 10 can be delivered as signed Java application resource ("JAR") files using a standard signing method, such as the signing method defined in the Java programming language. The JAR files can include classes and/or resource files, and, in some embodiments, the classes and/or resources files can be encrypted. To decrypt the encrypted files, the system 10 can include an executable (e.g., a program for executing a JVM) that decrypts the files as they are loaded. For example, a JVM executed by the system 10 can be passed details of a ClassFileTransformer agent through startup options of the JVM. The ClassFileTransformer agent can be configured to decrypt encrypted files, and the JVM can call or execute a preliminary function (e.g., a premain function) that creates an instance of a ClassFileTransformer agent. Once created, the ClassFileTransformer agent can decrypt encrypted files as needed in order for the system 10 to instantiate and execute other agents and/or applications 16. In some embodiments, the system 10 can require that a ClassFileTransformer agent be instantiated and configured before any other agent is instantiated in order to ensure that agents and other applications 16 of the system 10 can obtain decrypted files. The executable executing the JVM can also be configured to prevent access (e.g., debug access) to the decrypted files in order to prevent a system user from modifying the files and/or generating un-authorized copies of the files.

In some embodiments, system users obtain complete copies of the system 10 (i.e., software or code for all possible functionality provided with the system 10) and obtain licenses that allow them to run particular applications 16 or components of the system 10 (e.g., the applications 16 and components of the system 10 that the system user has purchased a license for). To manage and apply the licenses associated with a particular system user, the system 10 can include a license server. FIG. 28 illustrates a license server 940 according to one embodiment of the invention. As shown in FIG. 28, the license server 940 includes a license control file 950. The license control file 950 specifies what licenses are required in order to activate a particular application 16 or component of the system 10. The license control file 950 can be used to map activation authorization requests generated by applications 16 and/or components of the system 10 to licenses that are required in order for the license server 940 to authorize the activation of the applications 16 and/or components. In some embodiments, the license control file 950 includes one or more license files. For example, the license control file 950 can include a license file defining a base license or license package that allows core components of the system 10 to operate and one or more license files defining supplemental licenses that allow additional components of the system 10 to operate (e.g., ATM handling components, fraud management components, authorization components, etc.). In some embodiments, each license file can be associated with one or more licensable components of the system 10 and can define which components that when activated imply a use of the license, other components provided through a license, and/or other licenses and/or license packages associated with a license.

As shown in FIG. 28, the license server 940 also includes a software licensing authentication token ("token") 951, which can include hardware and/or software. The license server 940 can log on to the token 951 (e.g., access and read data included in the token 951) and can manage access to the token 951. As shown in FIG. 28, the token 951 can include a license key file 952 that defines the licenses available to a particular system user. The license key file 952 provides authorization to apply the available licenses if constraints of the available licenses are satisfied by the current state of the system 10. Using the license key file 952, the license server 940 can authorize activation of applications 16 and/or components associated with available licenses and can disable (e.g., prevent activation) of applications 16 and/or components associated with unavailable licenses or available licenses that have unsatisfied constraints. In some embodiments, each license key file 952 can specify parameters and/or constraints for each available license, such as an effective date, an expiration date, a total concurrent activations limit or count, a list of authorized named nodes, a list of authorized operating systems (or operating system aliases), a list of authorized MAC codes, a list of authorized JVMs, and/or an activation mode (e.g., "restricted" or "unrestricted") of components allowed under a license. In some embodiments, a license can include time constraints and can define actions for the license server 940 to take if the license become effective and/or expires. For example, actions included in a license can include instructions for shutting down applications 16 and/or components of the system 10 or instructions for posting renewal reminders on consoles or terminals of the system 10. The time constraints can also be used to authenticate activation of applications 16 and/or components at a particular future time by setting the effective date of a license accordingly. FIGS. 28A - 28D illustrate license key file examples 952a according to various embodiments of the invention.

In some embodiments, the token 951 can also include license constraints (e.g., run-time constraints). The token 951 can also include one or more keys. The keys can be used to decrypt encrypted files (e.g., encrypted JAR files) and, in some embodiments, the license server 940 can access the keys and provide a key to an application 16 of the system 10.

The license control file 950, the token 951, and/or the license key file 952 can be encrypted in order to prevent cheating. Licenses can also be tied to a system user's specific configuration so that system users cannot share licenses, and distributors cannot serve multiple system users with a single license. By customizing licenses and separating licenses for individual components, licenses can be created that expire on various schedules and have different prices. In some embodiments, the license server 940 can also provide current license status information to a system user, a system provider, and/or a system manager for tracking and/or billing purposes.

**[00248]** Licensable applications 16 and/or components of the system 10 can include license checking code or functionality that can initiate an activation authorization request for the license server 940. The license server 940 can then determine whether a license is available that authorizes activation of the applications 16 and/or the components initiating the activation authorization request. As described above, the license control file 950 can map components of the system 10 to one or more required licenses. The one or more required licenses can provide overlapping permissions (e.g., each of the required licenses, if available, can individually provide permission to activate the component) and only one of the one or more required licenses may be actually required to be available before the component can be activated.

In some embodiments, an application 16 of the system 10 includes multiple licensable components, and each component can include license checking code for initiating an activation authorization request. As described above, upon receiving an activation authorization request, the license server 940 can map the components requesting activation authorization to one or more required licenses or license packages using the license control file 950. The license server 940 can then determine whether the one or more required licenses are available using the token 951 (e.g., the license key file 952). In some embodiments, the license control file 950 can be customized and modified as needed without requiring modifications to license checking code included the applications 16. For example, potentially-licensed components can include license checking code that initiate activation authorization requests for the license server 940. If the license control file 950, however, does not include a mapping that associates the potentially-licensed component with one or more required licenses, the license server 940 can assume that the potentially-licensed component does not currently require a particular license. In general, the term mapping is defined as an association between a licensed component of the system 10 and at least one required license. A mapping can include various software techniques, such as keys, tables, matrices, functions, etc., that link or associate a licensed component of the system 10 with one or more required licenses. In some embodiments, a mapping can also associate a licensed component of the system 10 with particular constraints of one or more required licenses. Including license checking code in potentially-licensed components can reduce the number of software modifications required later if additional licensed components (i.e., components requiring licenses) are desired at a later date since only the mappings include in the license control file 950 may need to be modified.

Since the license server 940 can be considered an application 16 of the system 10, the license server 940 can be associated with configuration data. The configuration data can specify parameters for executing the license server 940, such as a multicast IP address and port of a license server 940 that other servers of the system 10 (e.g., other license servers 940) can use to communicate with the license server 940, a name that the license server 940 can use to publish itself as the primary license server, a license control file 950 to be used by the license server 940, a timer interval for regulating a monitoring process performed by the license server 940, and/or a predetermined time interval or number of access attempts for which the token 951 can be unavailable to the license server 940 before the license server 940 is required to relinquish its role as the primary license server.

In some embodiments, the software associated with the license server 940 is encrypted in order to prevent unauthorized modification. A wrapper can be added to the encrypted license server code that, on startup, can use services provided by the token 951 in order to decrypt the code.

The system 10 can include multiple license servers 940. In some embodiments, each instantiation of the system 10 can include a primary license server and one or more backup license servers. For example, if a network executes two versions of the system 10 (e.g., a first version of the system 10 for development and a second version of the system 10 for question and answer processing), each version of the system 10 can include a separate primary license server and one or more separate backup license servers. Each license server can be configured to verify that the applications 16 and components communicating with it are included in the version of the system 10 that the license server is associated with.

FIG. 28E illustrates a method of initializing the license server 940 according to one embodiment of the invention. As shown in FIG. 28E, to initiate the license server 940, the license server 940 processes the license control file 950 specified in the configuration data associated with the license server 940 and builds component mappings as specified in the license control file 950 (step 960). The component mappings can associate a component of the system 10 with one or more required licenses.

Once the license server 940 is initiated, the license server 940 can be activated as illustrated in FIG. 28F. As shown in FIG. 28F, the license server 940 can generate a process (e.g., a multicast thread) for processing get-key requests (step 970) as described below with respect to FIG. 281. The license server 940 can also initialize a timer with the timer interval specified in the configuration data associated with license server 940 (step 972). The license server 940 can use the timer to regularly perform a monitoring process as described below with respect to FIGS. 28L and 28M. For example, starting from the initialized time, the timer can count down, and once the timer reaches zero or expires, the timer can alert the license server 940 that it should perform the monitoring process and recheck the state of the system 10, the license control file 951, and/or the token 951.

Next, the license server 940 can attempt to log on to the token 951 (step 974). In some embodiments, only a single license server 940 can log on to the token 951 at one time. If no other license server has already successfully logged on to the token 951 before the license server 940 attempts to log on to the token 951, the license server 940 can successfully log on to the token 951 and can access the data included in the token 951 (e.g., the license key file 952). In some embodiments, the license server 940 initializes floating license information using the data included in the token 951. The floating license information can include all licenses and license constraint information currently available to the system 10 (e.g., those licenses purchased and/or obtained by a system user and the related constraints as defined in the license key file 952). In some embodiments, the floating license information also includes current environmental parameters of the system 10, which the license server 940 can use to determine whether constraints of a license arc satisfied. For example, the floating license information can include information regarding licenses applied or issued (e.g., permissions granted) to particular applications 16. The license server 940 can use the floating license information to authorize or decline activation authorization requests generated by components of the system 10 and track applied licenses.

If the license server 940 successfully logs on to the token 951 (step 976), the license server 940 can attempt to publish itself as the primary license server 940 by broadcasting a message or setting a primary license server address, port, etc. maintained by the system 10 to its own address, port, etc (step 978). In some embodiments, if no other license server has already published itself as the primary license server, the license server 940 can successfully publish itself as the primary license server (step 980).

As shown in FIG. 28F, if the license server 940 is unable to publish itself as the primary license server (step 980) or is unable to log on to the token 951 (step 976), the license server 940 can set itself as a backup server and can subscribe (e.g., create a subscriber process or thread) to the license server that has published itself as the primary license server (step 982).

FIG. 28G illustrates a method of operating a license server as a backup license server according to one embodiment of the invention. As shown in FIG. 28G, a backup license server creates a subscriber object (e.g., a subscriber process or thread) (step 990) and subscriber objects subscribes (e.g., generates and sends a subscribe request) to the primary license server (step 992). While the backup license server subscribes to the primary license server, as shown in FIG. 28H, the backup license server receives floating license information and updated floating license information from the primary license server (step 994). In some embodiments, a backup license server receives floating license information from communication threads generated by the backup license server. The communication threads access information (e.g., floating license information) logged by the primary license server and sends replies to the backup license server including the logged information or a portion thereof.

As described above with respect to FIGS. 10-15, a subscribe request can be returned when the component being subscribed to has failed or has deliberately relinquished its role. As shown in FIG. 28G, if a subscribe request generated by a backup license server returns, the backup license server can assume that the primary license server has failed or has relinquished its role as the primary license server, and the backup license server can attempt to publish itself as the new primary license server (step 996). If the backup license server successfully publishes itself as the new primary license server (step 998), the backup license server becomes the new primary license server and can exit or terminate the subscriber object it previously created.

If upon receiving a returned subscribe request, a backup license server does not successfully publish itself as the new primary license server (step 998), the backup license server can continue to operate as a backup license server and can reattempt to subscribe to the current primary license server of the system 10 (which may be the previous primary license server or a new primary license server) using the subscriber object it previously created (step 992).

In some embodiments, the system 10 may require that at least the primary license server 940 be initiated and activated before any other applications 16 or components of the system 10 are started. In addition, the system 10 can require that the license server 940 run on a node that is supported by the token 951 (e.g., run on a node that stores or includes the token 951). If the system 10 includes multiple license servers, the system can require that each node executing a license server be supported by a token, and a separate token can be installed on each node. Each token, however, can be equivalent.

Each application 16 executed by the system 10 can include a non-configurable application licenser component. In some embodiments, the application licenser component includes a "final" class, as defined in the Java programming language, which cannot be sub-classed. In addition, the application licenser component can be provided in a sealed package and can be delivered in a secured file (e.g., an encrypted JAR file) so that it cannot be bypassed or imitated. Each licensable component included in an application 16 (e.g., any class instantiated by the application 16) can register with the application licenser component. The application licenser component can be configured to use a list of registered components to generate an activation authorization request to be sent to the license server 940. The application licenser component can also be configured to route responses to the activation authorization response provided by the license server 940 to the individual components.

When an application 16 of the system is initialized, the application 16 (e.g., the application licenser component) can broadcast a get-key request. In some embodiments, the application 16 can also broadcast a get-key request at predetermined times when the application licenser component is configured to recheck licenses or when configuration data associated with the application 16 is dynamically updated while the application 16 is executing.

As described above with respect to FIG. 28F, each license server 940 included in the system 10 creates a process or thread that listens for get-key requests. As shown in FIG. 281, the process can continue listening for get-key requests and, once the process receives a get-key request (step 1000), the license server 940 can authenticate the get-key request in order to verify that it came from a valid license server client included in the system 10 (step 1002). In some embodiments, the license server 940 authenticates the request using the basic license included in the floating license information that relate to the core components of the system 10. If the license server 940 has not already initialized or obtained the floating license information, the license server 940 can also do so upon receiving a get-key request (step 1004).

Next, the license server 940 can check that the application 16 that generated the get-key request meets the license constraints of the basic license (step 1006). For example, the license server 940 can verify that the node executing the application 16 that generated the get-key request is a valid node.

After authenticating the get-key request, the license server 940 can obtain a decryption key from the token 951 (step 1008). If the license server 940 successfully obtains the decryption key from the token 951 (step 1010), the license server 940 can format, sign, and send a response, which includes the decryption key, to the application 16 that submitted the get-key request (step 1012). If the license server 940 does not successfully obtain the decryption key from the token 951 (step 1010), the license server 940 can attempt to re-authenticate and verify the get-key request or can ignore the get-key request and can continue listening for future get-key requests. In some embodiments, if an application 16 does not receive a reply to a get-key request within a particular time after sending the get-key request, the application 16 (e.g., the application licenser component) may re-broadcast the get-key request a predetermined amount of times before generating an error.

After receiving the decryption key from the license server 940, the application 16 can decrypt encrypted files (e.g., encrypted JAR files) as needed. The application 16 can then begin to create and activate components (e.g., objects) needed by the application 16.

As described above, a component (e.g., an instance of a class) instantiated by an application 16 can include license checking code for checking and managing license permissions. For example, each component can include an identifier that keeps track of current license permissions granted by the license server 940, a function for registering itself with the application licenser component, a function within its activation function for initiating an activation authorization request, a function for activating and managing a recheck of license permissions, and information on when the component should check and/or recheck license permissions.

Upon activating a component that includes license checking code, the application 16 and/or the application licenser component can add the component to a license checklist. The components listed in the license check list can then suspend activation until a response is received from the license server 940.

To complete activation of the suspended components, the application 16 sends an activation authorization request, which includes the license checklist, to the license server 940. In some embodiments, the activation authorization request also includes environmental parameters of the application 16, such as the name or identifier of a node executing the application 16, which may be needed to determine whether a required license associated with a particular component is available. The activation authorization request can also include enciphered control data that the license server 940 can use to authenticate the activation authorization request. By delaying activation authorization until activation of components of an application 16 is needed, system users can load updated license key files 952 and/or updated license control files 950 in order to add new functionality to the system 10 while the system 10 is running.

As shown in FIG. 28J, when the license server 940 obtains an activation authorization request from an application 16, the license server 940 authenticates the activation authorization request and verifies that the activation authorization request was generated by a valid license server client (step 1020). In some embodiments, the license server 940 can use the enciphered control data and/or the environmental parameters included in the activation authorization request to authenticate the activation authorization request.

The license server 940 can then verify that the floating license information is initialized and up-to-date (step 1022). The license server 940 can also initialize working variables, such as a current number of a particular component already activated or current date and time information, which may be needed to respond to the activation authorization request.

Next, using the basic license included in the floating license information, the license server 940 verifies that the core constraints of the system are satisfied and that the application 16 is allowed to generate and submit an activation authorization request (step 1024). If the core constraints are not satisfied (step 1026), the license server 940 can create a reject reply (step 1028) and can send the reject reply to the application 16 (step 1030). In some embodiments, the license server 940 can digitally sign the reply, and the application 16 and/or the application licenser component can use the digital signature to verify that the reply is from an authorized license server. The reject reply can include an "activation declined" response, which can inform the application 16 that authorization is not available for activating any of the suspended components. The reject reply can also inform the application 16 that it should exit or terminate.

If the core constraints are satisfied (step 1026), the license server 940 can initialize a success reply (step 1032). The license server 940 can then determine which components listed in the license checklist need to be checked. While the license checklist includes unchecked components (step 1034), the license server 940 can select an unchecked component (step 1036) and can use the mappings specified in the license control file 950 to determine what licenses are required in order to authorize activation of the component. If the license control file 950 does not specify a mapping for a specific component (step 1038), the license server 940 can assume that the component does not currently require a specific license, and the license server 940 can set the component status to "licensed" (step 1040). In some embodiments, the license server 940 sets the component status to "licensed" by adding a response to the success reply. Since no specific licenses are currently required to activate the component, the license server 940 can add a response to the success reply that includes an activation authorized response (e.g., a "run" response). The activation authorized response can indicate that the available licenses authorize the activation of the suspended component. As described above, the license control file 950 can be modified in order to change components of the system 10 that require licenses without requiring changes to the applications 16.

If however, the license control file 950 does specify mappings for a selected component (e.g., based on the mappings defined in the license control file 950) (step 1038), the license server 940 can determine one or more required licenses associated with a component. As shown in FIG. 28K, while required licenses remain that need to be checked (step 1042), the license server 940 can select an unchecked required license (step 1044), can determine if the required license is available (e.g., defined in the license key file 952) and, if the required license is available, can determine if the constraints of the required license are satisfied (step 1046). For example, the license server 940 can check static constraints (e.g., host restrictions) and dynamic constraints (e.g., counts of the number of instances of a component in the system 10 and/or on a specific node) for a required license associated with a component. As described above, if multiple required licenses associated with a component individually provide permission for activating a particular component, the license server 940 may be required to determine whether at least one of the required licenses is available and whether the constraints of any available required licenses are satisfied. In some embodiments, if multiple required licenses are available for authorizing the same component, the license server 940 can apply one or multiple available required licenses. For example, the license server 940 can the available required license that provides the best permissions for the component (e.g., provides the longest activation time before expiring).

As shown in FIG. 28K, if the license server 940 verifies that the required licenses (or at least one of the required licenses) associated with a particular component are available and have satisfied constraints (step 1046), the license server 940 updates the floating license information (step 1048) and adds a response to the success reply (step 1050). Since the license and the license constraints were satisfied, the license server 940 can add a response to the success reply that includes an activation authorized response. In some embodiments, depending on the available licenses and/or the constraints of available licenses, the license server 940 can add a restricted activation authorised response to the success reply. The restricted activation authorized response can indicate that a particular component can be activated, but must be activated with limited functionality. For example, an application 16 may activate a component that receives a restricted activation authorized response from the license server 940 such that the component can only provide services to internal requests generated by the system 10 and not direct requests generated by a system user or that the component cannot perform inter-process communications.

If the license server 940, however, determines one or more of the required licenses associated with a particular component are not available or have unsatisfied constraints (step 1046), the license server 940 can add a response to the success reply (step 1050) that includes an activation declined response (e.g., a "fail" response). Some applications may terminate or exit upon receiving an activation declined response from the license server 940. Other applications may continue to execute without activating the component associated with the activation declined response.

In some embodiments, if an available license associated with an authorized component includes a constraint that will change upon the instantiation or activation of the component, the license server 940 can update the constraint of the available license. For example, if an available license allows only a single instance of a particular component to be activated at one time, the license server 940 can update the available license (e.g., update the floating license information) in order to record that an instance has been activated. The license server 940 can also provide license updates to other license servers 940 (e.g., backup license servers) included in the system 10. In some embodiments, the license server 940 can log updated floating license information, such that the backup licenses servers, which subscribe to the primary license server 940, automatically receive the updated information (step 1052).

In addition, if an available license associated with an authorized component includes a time constraint (e.g., a constraint that allows an instance of the component to be activated for only a particular amount of time), the license server 940 can activate a timer that will notify the application 16 associated with the component that the application 16 should perform a license recheck when the timer expires or reaches a predetermined count.

After the license server 940 attempts to verify each component listed in the license checklist and adds appropriate responses to the success reply, the license server 940 can send the success reply to the application 16 that submitted the activation authorization request (step 1054). As described above, the license server 940 can digitally sign the success reply.

In some embodiments, the application 16 receiving a reject reply or a success reply from the license server 940 authenticates the reply (i.e., ensures that the reply was provided by an authorized license server 940). As described above, if the application 16 receives a reject reply from the license server 940, the application 16 can terminate and/or can attempt to re-authenticate itself with the license server 940 (e.g., re-broadcast a get-key request and/or an activation authorization request). If the application 16 receives a success reply from the license server 940, the application 16 can begin to activate the suspended components. As the application 16 activates each component, the application 16 can check the response provided by the license server 940 associated with the component and can activate or restrict activation of the component accordingly. For example, if the license server 940 provided a restricted activation authorized response for a particular component, the application 16 can activate the component with restricted or limited functionality.

In some embodiments, the primary license server monitors the state of the system 10, the license control file 950, the token 951, and/or the license key file 952 in order to detect changes or modifications. For example, a system user can obtain an updated license control file 950, an updated token 951, and/or an updated license key file 952. In some embodiments, a license control file 950, a token 951, and/or a license key file 952 may be transmitted over a network, such as a local area network ("LAN") or a wide area network ("WAN") such as the Internet, to a system user. For example, a license control file 951, a token 951, and/or a license key file 952 can be emailed to a system user and/or transmitted directly to nodes supporting license servers 940. The primary license server of the system 10 can also monitor the availability of the token 95l . In some embodiments, if the primary license server cannot access the token 951 for a predetermined amount of time or after a predetermined number of attempts, the primary license server can unpublish itself as the primary license server and can allow a backup license server to take over as the primary license server.

As described above, in some embodiments, the primary license server can initialize a timer, and once the timer reaches zero or another predetermined count, the timer can alert the license server 940 that it should recheck the state of the system 10, the license control file 951, the token 951, and/or the license key file 952. The primary license server can also initialize additional timers that track time constraints of licenses, which can alert the primary license server to recheck the state of the system 10, the license control file 950, the token 951, and/or the license key file 952 once the timers expire. Updating or refreshing the license control file 950, the token 951, and/or the license key file 952 can also cause the primary license server to automatically recheck the state of the system 10, the license control file 950, the token 951, and/or the license key file 952.

FIGS. 28L and 28M illustrate a monitoring process performed by the primary license server according to one embodiment of the invention. As shown in FIG. 28L, the primary license server can determine all of the applications 16 that were previously issued a license or granted permission to execute (e.g., applications 16 that the primary license server previously provided a decryption key to), and can test each application 16 in order to determine if the application is still executing or running. For example, as shown in FIG. 28L, while previously-running applications 16 remain that need to be tested (step 1060), the primary license server can select an application 16 and can test the application (step 1062) in order to determine whether the application 16 is still running (step 1064). If an application 16 is still running, the primary license server can determine whether additional applications 16 need to be tested (step 1060) and can test any additional unchecked applications 16 (step 1062).

As shown in FIG. 28L, if the primary license server determines that a previously running application 16 is no longer running, the primary license server records that a license recheck is required (step 1066), which the primary license server can use later to determine whether it should instruct the currently executing applications 16 to recheck their license permissions. In some embodiments, a license recheck is required after any application 16 terminates since an available license can include constraints related to one or more currently executing applications 16. For example, a particular license can require the concurrent execution of a particular application 16 and the constraints of the license may no longer be satisfied if the application 16 has terminated. The primary license server can also update the floating license information if an application 16 has terminated (step 1068) in order to record information related to the one or more terminated applications 16.

As shown in FIG. 28L, after checking all of the previously-running applications 16, the primary license server determines whether it identified any terminated applications 16 (e.g., whether it recorded that a license recheck was required) (step 1070). If a previously-running application 16 has terminated, the primary license server can log information (e.g., the floating license information) related to any terminated applications 16 (step 1072). As previously described, logging the information can automatically provide the information to any backup license servers.

After logging the information related to any terminated applications 16 (step 1072) or if the primary license server determines that a license recheck is not required (step 1070), the primary license server can determine if any licenses have become effective or expired (step 1074). As described above, a license can include time constraints (e.g., an effective date, an expiration date, etc.) and the primary license server can check the time constraints against timers or current time and date information managed by the primary license server and/or other components of the system 10 in order to determine whether a license can be applied or whether a license has expired. If a license has become effective or has expired, the primary license server can record that a license recheck is required (step 1076). In some embodiments, the primary license server also updates the floating license information if a license has become effective or has expired.

Next, the primary license server can determine whether the token 951 is available by attempting to access the token 951 (step 1078). If the token cannot be accessed by the primary license server for a predetermined interval or after a predetermined number of attempts (step 1080), the primary license server can unpublish itself as the primary license server (step 1082) and can cancel any subscriber requests initiated by backup license servers (step 1084). As described above with respect to FIG. 28G, canceling or returning a subscribe request to a backup license server causes the backup license server to attempt to take over as the primary license server. The primary license server that is relinquishing its role as the primary license server can also attempt to subscribe to the new primary license server (step 1086), as described above with respect to FIG. 28G. After relinquishing its position as the primary license server, the relinquished primary license server can also broadcast a recheck request that notifies all currently running applications 16 that they need to recheck their license permissions (step 1088).

As shown in FIGS. 28L and 28M, if the primary license server, however, can successfully access the token 951 (step 1078), the primary license server can determine whether it previously recorded that a license recheck was required (e.g., previously determined that an application 16 terminated or that a license had become effective or expired) (step 1090). If a license permission recheck is needed, the primary license server can broadcast a recheck request that notifies all currently running applications 16 that they need to recheck their license permissions (step 1088).

As shown in FIG. 28M, if the primary license server determines that a license permission recheck is not required (e.g., no applications 16 terminated and no licenses have become effective or expired) (step 1090), the primary license server can access the license control file 950 and/or the token 951 in order to determine if the license control file 950 and/or the token 951 has been modified (step 1092). As previously noted, the license control file 950 can be modified in order to change the components of the system 10 that require licenses or the licenses required for a particular component. For example, the license control file 950 can be modified to include new mappings that associate one or more required licenses with a particular component that previously did not require any licenses. The token 951 can also be modified in order to specify additional available licenses. In addition, the token 951 can be modified in order to revoke previously-available licenses and/or to modify licenses constraints.

If the primary license server determines that the license control file 950 and/or the token 951 have been modified (step 1092), the primary license server can broadcast a recheck request that notifies all currently running applications 16 that they need to recheck their license permissions (step 1088).

As shown in FIG. 28M, if the primary license server determines that the license control file 950 and the token 95 l have not been modified, the monitoring process is complete (step 1094). In some embodiments, the primary license server can repeat the above monitoring process at the later time. For example, the primary license server can reset a timer that the primary license server previously initialized, as described above with respect to FIG. 28F, and the primary license server can repeat the above monitoring process when the timer expires.

In some embodiments, upon receiving a recheck request from the license server 940, the application licenser component of an application 16 can automatically resubmit an activation authorization request to the license server 940. Once the license server 940 responds to the resubmitted activation authorization request, the application licenser component can update the current license permissions of each component as needed and can instruct each component to recheck its license permissions. Each component can recheck its current license permission and can react accordingly. For example, a component can terminate if a license required by the component has expired, is no longer available, has been changed, or includes constraints that are no longer satisfied.

As shown in FIG. 29, the system 10 can run on a computer (server) and can connect to terminals 1400, institutions 1410, HSMs 1420, and/or other equipment as needed. Online storage and database files 1430 can use a server's standard storage or network addressable storage and can usually employ a redundant array of independent disks ("RAID") configuration in order to provide fault tolerance and the ability to replace failed drives on the fly. For small systems, DBMSs, such as Oracle, DB2, or SQL Server, can run on a cluster of multiple separate servers (e.g., 2) that provide fail-over support, or a single fault tolerant server. A database abstraction layer within the system 10 can allow an application 16 to work with different types of database management systems seamlessly.

In some embodiments, a separate web application server, such as BEA Web Logic or IBM WebSphere, and a web server, such as Apache, Web Logic, or WebSphere can run on a separate web server computer 1440. The web server computer 1440 provides a user interface to a browser running in an end user's remote computer 1450. A firewall 1460 can protect the web server from unwanted external intrusions. A second firewall (not shown) can protect the system components from a web server environment.

In some embodiments, system users can execute two active versions of the system 10. A first system version (a testing system) can be used for initial installation and testing of new software releases. A second system version (a production system) can be used to run tested and configured applications.

As shown in FIG. 30, the system 10 can run on multiple servers clustered in order to provide automatic fail-over for failed servers. Multiple clusters, usually on multiple networks, can provide additional fail-over protection.

Various types of system end points can be connected to the system 10 through routers 1470, which help balance the workload between the available servers. Common resources, such as HSMs 1420, can be grouped into available pools and used as needed. Pooled resources can take up work when individual resources fail.

Local storage can use network addressable storage or storage array networks ("SANs") 1480, usually in a RAID configuration that is fault tolerant, and supports online drive replacement for failed components.

Database servers 1430 can be grouped into their own highly reliable database cluster, or can make use of special fault tolerant equipment. The database servers 1430 can include fault tolerant servers.

As shown in FIG. 30, a series of separate web application servers 1440 can provide system user interface processing. These servers can run application server software, such as IBM WebSphere, BEA WebLogic, Macromedia Jrun, JBoss, etc. The web application servers 1440 can be clustered in order to tolerate failures among the web application servers 1440.

Individual web pages can be provided to each end user through standard web server computers 1490 running web server software, such as IBM WebSphere, BEA WebLogic, or the Apache web server. The web server computers 1490 can be protected by a site security system 1500, such as those provided by Netegrity Siteminder, and can be connected to a network, such as the Internet or another network facility, through routers that distribute the processing load evenly among the available web servers.

Firewalls 1510 and 1520 can protect the web server computer in a user-facing data management zone, and can Further protect the system servers and the database servers 1430 from outside intrusions.

Disaster recovery addresses the problem of keeping the system 10 running through a disaster that can disable a data processing center managing the system 10. The system 10 can address disaster recovery by supporting a geographically distributed configuration that can run in multiple processing sites simultaneously. In some embodiments, the system 10 uses various approaches to provide multi-site processing, such as hot backups, cold backups, and variations in between, which are commonly called warm backups.

In some embodiments, the most effective way to provide continuous processing is to distribute the physical location of the system 10 over multiple sites with enough duplication at each site to be capable of incorporating the load of any other site. The system 10 can execute at multiple sites (e.g., two sites) with sufficient redundancy in order to ensure that each site can continue processing effectively when another site fails. System sites can continuously process transactions and can synchronize database files on a continuous basis, usually through a primary/secondary database relationship. The system 10 can provide facilities in order to ensure that critical information in log files are automatically duplicated at remote sites.

If components within one site fail, redundant facilities within that site can provide immediate backup for the failed component. If one entire site fails, however, the second site can continue processing without interruption. This approach to availability is similar to the way the Internet distributes its backbone servers around the globe. One or more of these installations can be down for maintenance, broken, under attack by a malicious agent, or otherwise out of commission, but the Internet can still continue to function. If enough components are unavailable, response time for the end user can start to suffer, but the system 10 can still process as much traffic as possible.

An end point connected only to components that have failed can see a true system failure, and, therefore, end points can be connected to the system 10 at multiple geographic locations, preferably through different communications facilities. Some in-flight transactions can be lost when a site fails, but they can be completed normally if retried.

Unlike hot backups, cold backups provide backup processing facilities at a secondary processing site, but do not use those facilities until the primary site fails. This approach can cause a noticeable system outage while the backup site is configured for productive operation and the backup system is brought on line. However, once the backup site is operational, the backup site can support system processing while the primary site remains unavailable.

The system 10 can support a broad range of hot to cold backup configurations depending on the required level of system availability and the resources available for the backup environment. In addition to setting up a proper configuration for system recovery and continuous operation, system users can modify and maintain the recovery configuration in order to meet changing conditions and maintenance schedules.

In some embodiments, in order to provide a continuously available system, the system 10 can allow system users to dynamically add or remove processing nodes 800 (application server computers) without disrupting the system's operation. The system 10 can detect new nodes 800 automatically or through configuration data changes identifying the new node's identity and address. The normal load balancing facilities then can automatically feed new work to an added node 800 without manual intervention. The system 10 can also detect failed nodes 800 and can automatically take them out of the currently active system. To remove an actively running node 800, a system user can shutdown the node manually in order to properly finish any work in progress. The system 10 can then take the node out of the currently active system just as it would for a failed node 800.

Removing and adding nodes 800 allows systems managers to maintain equipment, upgrade the existing hardware, maintain the current version of an operating system, perform standard database maintenance, and keep the system 10 up to date and running smoothly with regularly scheduled maintenance. Removing and adding nodes 800 allows managers to add nodes 800 when data processing volume required of the system 10 increases and to remove nodes 800 when data processing volume required of the system 10 decreases without disrupting current transaction flow.

In some embodiments, the system 10 provides continuous availability even when updates are made to nodes 800. In order to support updates to the system 10 by updating one node 800 at a time, the system 10 can run some nodes using a "current" version of an application 16 (e.g. V 1.0) and some nodes using a "next" version of the application 16 (e.g. V1.1). This ability to run a current application version and a next application version at the same time is known as "N, N+1" processing, where "N" stands for any version of the system, and "N+1" stands for the next version to be installed.

In some embodiments, new features available only in the N+1 version are not usable until the entire system 10 has been updated, but the current version can run correctly and uninterrupted during the update process. In addition to providing continuous availability during an application update, N, N+1 processing makes it easy to verify that an update does not disrupt the system's existing functions by allowing system users to update just a single node 800, or even a single process, for production verification before updating the rest of the system 10. In some embodiments, version updates of the system 10, including configuration data changes, programming changes, database changes, etc., are N, N+1 compatible.

Various features and advantageous of the invention are set forth in the following claims.

## Claims

1. A method of determining whether a component defined in a computer program is authorized to activate, the method comprising:
receiving an activation authorization request from the component;
accessing a license control file defining a plurality of mappings, each of the plurality of mappings associating at least one of a plurality of components defined in the computer program with at least one required license;
determining if the component is associated with at least one required license based on the plurality of mappings; and
providing a response to the component.

2. The method of claim 1, wherein providing a response to the component includes providing an activation authorized response to the component.

3. The method of claim 2, wherein providing an activation authorized response to the component includes providing a restricted activation authorized response to the component.

4. The method of claim 1, wherein providing a response to the component includes providing an activation declined response to the component.

5. The method of claim 1, further comprising accessing a license key file defining at least one available license associated with the computer program.

6. The method of claim 5, further comprising determining if the at least one available license includes the at least one required license associated with the component.

7. The method of claim 6, further comprising determining if at least one constraint of the at least one required license associated with the component is satisfied.

8. The method of claim 1, wherein providing a response to the component includes providing an activation authorized response to the component if the component is not associated with at least one required license based on the plurality of mappings.

9. The method of claim 1, further comprising sending a license recheck request to the component if the state of at least one of the computer program, the at least one required license, and the license control file has been modified.

10. A system for determining whether a component defined in a computer program is authorized to activate, the system comprising:
a license control file defining a plurality of mappings, each of the plurality of mappings associating at least one of a plurality of components defined in the computer program with at least one required license; and
a license server configured to receive an activation authorization request from the component, to determine if the component is associated with at least one required license based on the plurality of mappings, and to provide a response to the component.

11. The system of claim 10, wherein the response includes an activation authorized response.

12. The system of claim 11, wherein the activation authorized response includes a restricted activation authorized response.

13. The system of claim 10, wherein the response includes an activation declined response.

14. The system of claim 10, further comprising a license key file defining at least one available license that is associated with the computer program.

15. The system of claim 14, wherein the license server is further configured to determine if the at least one available license includes the at least one required license associated with the component.

16. The system of claim 15, wherein the license server is further configured to determine if at least one constraint of the at least one required license associated with the component is satisfied.

17. The system of claim 10, wherein the response includes an activation authorized response if the license server determines that the component is not associated with at least one required license based on the plurality of mappings.

18. The system of claim 13, wherein the license server is further configured to send a license recheck to the component if the state of at least one of the computer program, the at least one required license, and the license control file has been modified.

19. A system for determining whether a plurality of components defined in a computer program are authorized to activate, the system comprising:
a primary license server configured to receive activation authorization requests from the plurality of components, to access a license control file defining a plurality of mappings, each of the plurality of mappings associating at least one of the plurality of components with at least one required license, and to provide a response to the plurality of components.

20. The system of claim 19, wherein the primary license server is further to access a token and to provide a key included in the token to a plurality of applications defined in the computer program.

21. The system of claim 20, further comprising at least one backup server configured to access the token if the primary license server cannot access the token.

22. The system of claim 20, wherein the response is based on the plurality of mappings.

23. The system of claim 20, wherein the primary licenser server is further configured to access a license key file defining at least one available license.

24. The system of claim 20, wherein the response is based on the at least one available license.
